# EUROPEAN PATENT APPLICATION

(11) **EP 4 520 570 A1**
(43) Date of publication of application: **12.03.2025**
(21) Application number: 24185353.0
(22) Date of filing: 28.06.2024
(51) Int. Cl.: B60K 35/10, B60K 35/21, B60K 35/25, B60K 35/26, G06N 3/02, G06V 10/82, G06V 20/59

(54) **IMPROVING SYSTEMS AND/OR IMPROVING VEHICLE SYSTEMS**

(71) Applicant: Wuhan Lotus Cars Co., Ltd., Wuhan, Hubei (CN); Fraunhofer-Gesellschaft zur Förderung der angewandten Forschung e.V., 80686 München (DE)
(72) Inventor: The designation of the inventor has not yet been filed
(74) Representative: Studio Torta S.p.A.

(57) **Abstract**

With respect to a **disclosed first complex,** a method for operating a system, especially a vehicle system associated with a vehicle, comprises obtaining, by means of the system, user data relating to at least one user of the system from at least one source; and analyzing, by means of the system, the user data, thereby determining at least one user attribute of the user of the system; and analyzing, by means of the system, the at least one user attribute. The method further comprises controlling, by means of the system, at least one specific element of the system in a first way based at least in part on at least one result of the analysis of the at least one us-er attribute.

## Description

With respect to a **disclosed first complex,** a preferred embodiment relates to a method for operating a system, such as a vehicle system of a vehicle. Further embodiments relate to a computer program product, a control unit for a system, and a vehicle.

With respect to a **disclosed second complex,** a preferred embodiment relates to a method for operating a vehicle system of a vehicle. Further embodiments relate to a computer program product, a control unit for a vehicle system, and a vehicle.

With respect to a **disclosed third complex,** a preferred embodiment relates to a method for operating a vehicle system of a vehicle. Further embodiments relate to a computer program product, a control unit for a vehicle system, and a vehicle.

With respect to a **disclosed fourth complex,** a preferred embodiment relates to a method for operating a vehicle system of a vehicle. Further embodiments relate to a computer program product, a control unit for a vehicle system, and a vehicle.

### Background

Today, with respect to the **disclosed first complex,** it becomes increasingly necessary for users to interact with technical systems, for example via human-machine interfaces. Especially in the field of vehicles, there is an intensive encounter between users and vehicle systems of the vehicle. However, many users are uncomfortable with the operation of impersonal systems. As a result, users may not utilize the full range of functions provided by the respective system. Furthermore, users' willingness to accept information or the like provided by the system can be diminished or in some cases users may even deactivate the system or parts thereof. In addition, this may lead to overall lower user engagement, satisfaction and immersiveness.

Accordingly, there is a need for an improved design or configuration of respective systems.

Today, with respect to the **disclosed second complex,** there is an increasing amount of information available that can be taken into account when planning a journey with a vehicle. In fact, in many cases a large amount of information even needs to be taken into account. For example, a break in the journey may be necessary to charge the vehicle battery and must be taken into account accordingly by a vehicle system when planning the journey. Further information on traffic and weather conditions as well as information on the requirements of the individuals inside the vehicle may also be available and may be part of the boundary conditions to be taken into account. For example, vehicle systems normally comprise a variety of on-board sensors for detecting characteristics of a vehicle state, one or more wireless communication units for receiving and transmitting data via a communication network, for example, in a vehicle-to-vehicle communication, and one or more user interfaces which provide the driver and other passengers the possibility to input data, for example, for operating a navigation application among other functionalities of the vehicle system. However, planning a journey based on such a large amount of information and taking into account the needs and requirements of one or more individuals present in (inside) the vehicle can be complex. This, hence, can pose a high cognitive demand on a driver or user.

In addition, information which is automatically provided to a driver or user based on incorrectly derived demand, interest, preference, etc., of the passengers can lead to weariness of the driver and can decrease the driver's willingness to accept automatically provided information in the future. In some cases, a driver may even deactivate the automatic provision of information by the vehicle system, in which case the (full) capacity of the vehicle system to assist the driver and other passengers in decision making would remain unused.

Accordingly, there is a need for improved driver and passenger assistance by means of a vehicle system.

Today, with respect to the **disclosed third complex,** in-vehicle entertainment systems are a popular measure to relieve boredom of the individuals in (inside) the vehicle and improve their travel experience. In particular, audio-based entertainment such as audiobooks, news, music, etc. are popular options. Of course, a high level of driver attention and safety must still be ensured.

Accordingly, there is a need for improved means for a vehicle system.

Today, with respect to the **disclosed fourth complex,** planning a journey with a vehicle may pose a high cognitive demand to a driver of the vehicle or individual who is planning the journey - possibly even during the journey. For example, individuals often want increased items with them during a journey. However, it may be a complex object to accomplish this task in an efficient way.

Accordingly, there is a need for improved driver assistance by means of a vehicle system.

### Brief Summary

Accordingly, with respect to the **disclosed first complex,** there is provided a method according to claim 1 (and item I-1), a computer program product according to claim 13 (and item 1-13), a control unit for a system according to claim 14 (and item 1-14), and a vehicle according to claim 15 (and item 1-15).

According to an aspect of the **disclosed first complex,** there is provided a method for operating a system, especially a vehicle system associated with a vehicle. The method comprises:
- Obtaining, by means of the system, user data relating to at least one user of the system from at least one source;
- Analyzing, by means of the system, the user data, thereby determining at least one user attribute of the user of the system;
- Analyzing, by means of the system, the at least one user attribute; and
- Controlling, by means of the system, at least one specific element of the system in a first way based at least in part on at least one result of the analysis of the at least one user attribute.

Controlling the specific element as described may enhance engagement an immersion of the user with the system. Particularly an in-car environment may be dynamically adapted, such as personalized, based at least on the at least one result of the analysis of the at least one user attribute. This is because the specific element can be ultimately adapted based on attributes of the user.

A two-stage approach is applied, in that the user data is analyzed and based on a result of this analysis (i.e., the user attributes) a result is obtained which serves as a basis for controlling the system. The two-stage-approach here has the particular advantage that fine-granular information can be retrieved from the user data.

Although in this application the disclosure of the first complex has a special focus on vehicles and, therefore, systems designed as vehicle systems associated with a vehicle, the applicability of the disclosed first complex is valuable beyond vehicles (particularly in-car environments of vehicles), for example for public displays and self-service terminals. The system may, therefore, be part of a public display and/or a self-service terminal.

Obtaining user data may comprise sensing, by means of a sensor system such as a camera device, an environment of the system. As a result of the sensing, the user data related to the user of the system may be obtained. Especially at least one image of the user of the system may be obtained. The environment of the system may be an in-car environment of a vehicle which uses the system. Alternatively or in addition, obtaining user data may comprise accessing, by means of the system, at least one image of the user, which can be stored external to the system, such as at least one image of the user stored on a social media platform.

Such a sensor system is a preferred source for obtaining information on the user. Preferably the sensor system is part of the system (or the vehicle associated with the vehicle system).

Analyzing the user data may comprise determining, by means of the system, based at least in part on the user data, information related to the user's appearance. For example, this information may be information related to at least one upper body clothing, at least one lower body clothing, at least one hat, at least one cap, at least one eyewear, at least one footwear and/or at least one accessory, respectively, worn by the user. The determined information may be used as the at least one user attribute.

For example, the user data may contain information on the categories of the clothes and accessories the user wears. This may be one stages of the stages of the analysis approach provided herein.

A CNN multilabel classifier may be used for analyzing the user data and/or for determining information related to the user's appearance. Alternatively or in addition, at least one external fashion dataset may be used for determining information related to the user's appearance.

The CNN is a Convolutional Neural Network. Such a CNN may be pre-trained on annotated user data which have been collected on earlier occasions and/or which have been synthetically generated.

Analyzing the at least one user attribute may comprise determining, by means of the system, based at least in part on the user attributes, information related to the user's attributes. For example, this information may be information related to at least one color, at least one design, at least one pattern, at least one material, at least one brand and/or at least one appearance category, such as formal, casual, edgy and/or professional, respectively, of the user's attribute.

A CNN multilabel classifier may be used for analyzing the at least one user attribute and/or determining information related to the user's attributes.

Such a CNN may be pre-trained on annotated user attributes which have been collected on earlier occasions and/or which have been synthetically generated.

Controlling the specific element of the system in the first way may comprise adapting, by means of the system, secondary characteristics or secondary appearances of the specific element or parts thereof, such as at least one color of the specific element or parts thereof.

For example, said secondary characteristics or appearances of the specific element may consider current preferences of the user. Therefore, said secondary characteristics or appearances of the specific element may be characteristics or appearances of the specific element which are subject to immediate adaptions based on a situational property, behavior and/or mood of the user. Also, the type of means (e.g., vehicle, external display, or the like) may be considered.

For example, the specific element may be a human-machine interface (such as a touch-sensitive monitor) and the secondary characteristics or appearances of the human-machine interface may be directed to the color of the human-machine interface (e.g., a main color used on the monitor display).

For example, the specific element may be an ambient light unit and the secondary characteristics or appearances of the ambient light unit may be directed to the color of light emitted by the ambient light unit.

This way the adaptations of the specific element may provide a sense of personalization and ownership, hence, better user engagement and experiences.

The method may further comprise
- Storing, by means of the system, results of consecutive analysis of user attributes in a database, thereby forming a database having historical analysis results;
- Evaluating, by means of the system, one or more of the historical analysis results stored in the database; and
- Controlling, by means of the system, the specific element of the system in a second way based at least in part on at least one result of the evaluation of the historical analysis results.

Evaluating historical analysis results can provide general information on the user. Thereby a general adaption of the system may be possible so as to meet the general requirements of the user in a comfort way.

Controlling the specific element of the system in the second way may comprise adapting, by means of the system, primary characteristics or primary appearances of the specific element or parts thereof, such as the displayed number of sub-elements, at least one layout, at least one icon style, at least one shape and/or at least one typography, respectively, of the specific element or parts thereof.

For example, said primary characteristics or appearances of the specific element may consider long-term preferences of the user. Therefore, said primary characteristics or appearances of the specific element may be characteristics or appearances of the specific element which are subject to intermittent adaptions based on a (especially general) style and/or personality of the user.

For example, the specific element may be a human-machine interface (such as a touch-sensitive monitor) and the primary characteristics or appearances of the human-machine interface may be directed to one or more of the displayed number of sub-elements, the layout, the icon style, the shape and the typography, respectively, of the human-machine interface. The human-machine interface may comprise one to multiple displays, controls, input devices and/or output devices (for example: visual, haptic, auditory). The displayed number of sub elements is an example of visual adaptations; adaptations can also be of auditory and/or haptic modality, for example.

This way the adaptations of the specific element may provide a sense of personalization and ownership, hence, better user engagement and experiences.

The method may further comprise
- Receiving, by means of the system, context information related to the context under which the system is currently used and/or under which the user currently acts. Such context information may be at least one users' calendar information, at least one user's route destination, at least one current position of the vehicle, at least one map, at least one traffic density and/or at least one road type;
- Determining, by means of the system, based at least in part on the context information, a first time to start controlling the specific element in the first way and/or a second time to start controlling the specific element in the second way; and
- Start, by means of the system, controlling the specific element in the first and/or second way at the determined first and/or second time.

This way a preferred situation for adaptions of the specific element can be determined. For example, if the user is to be visiting a special event and/or place (e.g., race track and/or beach), the system (in case of a vehicle system) may adapt the specific element in good time before the event starts so as to bring the user into an appropriate mood. It can preferably also be checked if the mood has changed.

The method may further comprise receiving, by means of the system, feedback from the user regarding at least one result of controlling the specific element in the first and/or second way. For example, the feedback may be an acceptance and/or a rejection of at least one result of controlling the specific element. The user may provide this feedback via some input device of the system. Then, the method may comprise controlling, by means of the system, the specific element in the first and/or second way based further on at least one evaluation of the received feedback.

This way an even more suitable adaption of the specific element can be provided.

The method may further comprise controlling, by means of the system, the specific element in the first and/or second way based further on at least one evaluation of at least one of: a visual attention score, a visual similarity score and a content readability score.

A visual attention score may be obtained based on of eye tracking data and/or driving behaviour data and/or it may contain information on total glance durations, time on task, attention, lane keeping behaviour, steering behaviour and/or steering wheel reversal rate.

For example: To calculate the visual attention score between an original user interface (UI) theme and an adapted UI theme, eye-tracking metrics and predictive gaze attention models may be used. First, key elements in the UI, such as navigation bars, search bars, and primary buttons, are identified and these are defined as Areas of Interest (AOIs). Then conducting eye-tracking studies with participants using both Uls, capturing metrics such as fixation duration and count, which indicate how long and how often users look at specific elements. Alternatively, predictive gaze attention models like Saliency models or DeepGaze, which simulate and predict where users are likely to focus their attention, may be used. The UI designs are inputted into these models to generate heatmaps and attention scores. The visual attention scores are compared by analyzing the distribution of fixations, heatmap intensity, and overall engagement levels. Statistical tests like t-tests or ANOVA may help determine significant differences in visual attention between the two Uls. This process may reveal how effectively each UI captures user attention and can guide further design improvements.

A visual similarity score may be obtained in that standard HMI is compared to the adapted HMI version pixel per pixel and a score is calculated based on colours and form using existing tools.

For example: To calculate the visual similarity score between two user interface (UI) versions, such as an original theme and an adapted theme, computer vision techniques facilitated by tools like OpenCV and scikit-image may be employed. These tools aid in extracting key visual features such as color histograms, texture patterns, and structural layouts from both UI designs. The extracted features are then represented as feature vectors, which are subjected to similarity analysis using metrics like cosine similarity or Euclidean distance, implemented via libraries such as numpy and scipy. Normalization of feature vectors ensures unbiased comparison across different scales. By quantifying the resemblance between feature vectors, insights into the visual coherence and alignment of UI adaptations may be gained, guiding iterative refinements to optimize user experience and aesthetic consistency across interfaces.

A content readability score may be obtained based on eye tracking data and/or driver monitoring data and/or it may contain information on single glance durations, total glance durations, using mimics and/or failures.

For example: To compute the content readability score, focus may be put on analyzing text readability using established readability guidelines and contrast ratios. Web Content Accessibility Guidelines (WCAG), outlines several key principles to enhance accessibility, such as perceivable, operable, understandable, and robust content. Ensure the contrast ratio between text and background colors adheres to the WCAG guidelines. Additionally, WCAG recommends using a sufficient font size and a clear, legible typeface. Automated readability tools like Readable can also streamline this process, providing scores and suggestions for improvement.

The specific element may comprise at least one ambient light unit and/or at least one human-machine-interface. The at least one human-machine-interface may have one or more parts, such as at least one touch-sensitive monitor, at least one key and/or at least one knob. For example, controlling the specific element (e.g. the human-machine-interface) in the first and/or second way may result in adapting one or more of its parts (e.g. said monitor, said key and/or said knob) such that the primary and/or secondary characteristic or appearance of the specific element or parts thereof is adapted.

The specific element may comprise at least one output functionality. The output functionality may be configurable or configured to provide perceivable output, such as visual, acoustic and/or haptic output, to a user of the system, such as a driver of the vehicle.

Controlling the specific element in form of an output functionality may be performed such that the output is provided to at least one user by means of the at least one output functionality.

The system may be a vehicle system associated with a vehicle. In this case, the user of the vehicle system may be a driver of the vehicle.

The specific element may be arranged within the interior of the vehicle. The specific element may be accessible by the user during driving the vehicle.

According to another aspect of the **disclosed first complex,** a computer program product is provided. The computer program product comprises portions of program code which, when executed by a processor of a control unit of a system, especially a vehicle system associated with a vehicle, cause the control unit to perform the method as herein provided with respect to the disclosed first complex.

According to another aspect of the **disclosed first complex,** a control unit for a system, especially a vehicle system associated with a vehicle, is provided. The control unit comprises a processor and a storage device operatively coupled to the processor. The storage device stores portions of program code which, when executed by the processor, cause the control unit to perform the method as herein provided with respect to the disclosed first complex.

According to another aspect of the **disclosed first complex,** a vehicle is provided. The vehicle comprises a vehicle system, the vehicle system comprising a control unit as herein provided with respect to the disclosed first complex and one or more specific elements, such as human-machine-interfaces and/or ambient light units, operatively coupled to the control unit.

Accordingly, with respect to the **disclosed second complex,** there is provided a method according to item II-1, a computer program product according to item 11-13, a control unit for a vehicle system according to item II-14, and a vehicle according to item II-15.

According to an aspect of the **disclosed second complex,** there is provided a method for operating a vehicle system associated with a vehicle. The method comprises obtaining, by means of the vehicle system, input data. The method further comprises determining, by means of the vehicle system and based on the obtained input data, at least one first output to be provided to one or more individuals present in (inside) the vehicle for a journey using at least one first output functionality of the vehicle system wherein the first output is determined to provide at least one collection of selection options each collection having one or more selection options to the individuals to assist the individuals in a decision-making process in a driving route planning for the journey. The method further comprises controlling, by means of the vehicle system, the at least one first output functionality in accordance with the determined first output. The method further comprises receiving, by means of the vehicle system, selection data relating to selection options selected by the individuals. The method further comprises determining, by means of the vehicle system and based on the received selection data, at least one second output to be provided to at least one of the one or more individuals present in the vehicle using at least one second output functionality of the vehicle system wherein the second output is determined to provide one or more POI (Point of Interest) options for the journey to the at least one individual to assist the individuals in the decision-making process in the driving route planning for the journey. The method further comprises controlling, by means of the vehicle system, the at least one second output functionality in accordance with the determined second output.

The journey, thus, can be planned based on a selection of POls which in turn are determined based on selection options which take into account appropriate input data.

In other words, there is applied a multi-stage approach in that the input data is used to first determine selection options and then the selected selection options are used to determine possible POls which may be relevant for the journey. This way in addition to the original input data also specifications and adaptions may be taken into account when assessing the possible POls. This constitutes a fine-granular data processing approach, in which the possible POIs are determined across multiple processing stages. In each processing stage an appropriate processing scheme may be used tailored to the respective data to be processed.

In addition and especially, the multi-stage approach allows a collaborative interaction between multiple individuals present in the vehicle. For example, there may be provided multiple first output on more than one first output functionality of the vehicle system, as described in more detail also below. The multiple first outputs may be all or at least in part different. For example, there may be provided one single second output on one second output functionality of the vehicle system. The second output functionality may for example be one of the first output functionalities, such as the first output functionality assigned to the driver of the vehicle. In exemplary embodiments, each individual has an own first output functionality. This way each individual may contribute to the collaborative interaction and to the driving route planning. In some embodiments, options might be pre-selected, e.g. due to the type of passengers, such as a playground when children are onboard or dog-friendly options.

This way, the cognitive demand of the driver (and optionally other passengers of the vehicle) can be reduced.

At least some of the individuals may use their own mobile device as their respective first output functionality. In this case the mobile device for the purpose of providing a respective output functionality is considered as being part of the vehicle system.

For example, the input data may be collected automatically by the vehicle, thereby obtaining the input data.

Controlling the at least one first output functionality in accordance with the determined first output may be performed such that the determined first output is provided to at least one of the one or more individuals (for example to the driver and/or to one or more passengers) by means of the at least one first output functionality.

Controlling the at least one second output functionality in accordance with the determined second output may be performed such that the determined second output is provided to at least one of the one or more individuals (for example to the driver and/or to one or more passengers) by means of the at least one second output functionality.

The determined first output may comprise at least one of a visual, an acoustic, an olfactory and/or a haptic output. The determined second output may comprise at least one of a visual, an acoustic, an olfactory and/or a haptic output.

Obtaining input data may comprise: Obtaining, by means of the vehicle system, first input data related to information on one or more entities present in the vehicle. The entities present in the vehicle may be one or more individuals (the driver and/or one or more passengers being among them). In addition, in some examples, obtaining first input data may comprise: Sensing, by means of a sensor system, such as a camera device, a microphone device and/or proximity sensor, an in-vehicle environment, thereby obtaining the first input data.

Such a sensor system is a preferred source for obtaining information on the entities or conditions of or inside the vehicle. Preferably the sensor system is part of the vehicle system or the vehicle associated with the vehicle system. The proximity sensor may be, for example, provided within one or more seats of the vehicle so as to obtain information about the number of occupied seats. This way the number of entities (especially passengers) inside the vehicle may be obtained easily. In some embodiments, the proximity sensor may be designed in form of a seat occupancy detection sensor, which for example works by detecting a weight. Alternatively, or in addition, the number of entities may be obtained through cameras of the vehicle's outside and inside. For example, a digital mirror camera may be used here as a sensor.

Based on the first input data the first output may be adapted to meet individual aspects of the individuals. Especially if some or all individuals have their own first output functionality the respective first outputs may be adapted based on the first input data related to the respective individual. Thus, for some or all individuals the first output may be different.

Alternatively or in addition, obtaining input data may comprise: Obtaining, by means of the vehicle system, second input data related to information on status information of the vehicle, such as a charge status of the vehicle, and/or related to traffic information relevant for the journey. In addition, in some examples, obtaining second input data may comprise: Sensing, by means of a sensor system, such as a battery sensor, parts of the vehicle, and/or accessing traffic information from at least one navigation system and/or from at least one remote source, thereby obtaining the second input data.

The remote source may be extern to the vehicle. In this case the remote source may be accessed via a communication link suitable for bidirectional data transfer provided by the vehicle system (such as a mobile connection).

Such a sensor system is a preferred source for obtaining information with respect to the vehicle, the traffic and/or the journey. Preferably the sensor system is part of the vehicle system or the vehicle associated with the vehicle system. For example, the sensor system may have a camera device observing an environment exterior of the vehicle. The respective data obtained by the sensor system (such as the camera device) may comprise information on the road condition, on the traffic and/or on other road users, and that data may be used as input data.

Obtaining input data may comprise: Obtaining, by means of the vehicle system and based on historical data, third input data related to information on at least one of the one or more individuals present in the vehicle. In addition, in some examples, the historical data are stored in a database and/or relates to previous interests, previous preferences and/or previous visits associated with the respective at least one individual.

Evaluating historical data can provide general information on the individual. Thereby a general adaption of the first output may be possible so as to meet the general requirements of the user in a comfort way.

The database may be part of the vehicle system. The database may also extern to the vehicle. In this case the database may be accessed via a communication link suitable for bidirectional data transfer provided by the vehicle system (such as a mobile connection).

Alternatively or in addition, obtaining input data may comprise: Obtaining, by means of the vehicle system, fourth input data relating to contextual information of the planned journey. In addition, in some examples, obtaining fourth input data may comprise accessing calendar information, especially comprising time, destination and/or content, respectively, of one or more calendar entries, of at least one of the one or more individuals present in the vehicle, accessing weather information, accessing current position information, accessing destination information and/or accessing traffic information relevant for the journey.

Based on the contextual information the first output may be adapted to meet individual aspects of the individuals. Especially if some or all individuals have their own first output functionality, the respective first outputs may be adapted based on the contextual information related to the respective individual. Thus, for some or all individuals the first output may be different.

Alternatively or in addition, obtaining input data may comprise: Receiving, by means of the vehicle system, fifth input data in form of voice input from at least one of the one or more individuals present in the vehicle and translating the voice input into suitable form thereby generating fifth input data. In addition, in some examples, receiving fifth input data may comprise: Sensing, by means of a sensor system, such as a microphone device, an in-vehicle environment, thereby obtaining the voice input.

Such a sensor system is a preferred source for obtaining voice input. Preferably the sensor system is part of the vehicle system or the vehicle associated with the vehicle system. For example, the sensor system may have a microphone device recording an interior environment of the vehicle. The respective data obtained by the sensor system (such as the microphone device) may comprise information (for example meta data) which provides a link between the recorded voice input and the individual from who the voice input originates.

The method may further comprise determining, by means of the vehicle system and based on the obtained input data, a plurality of first outputs each to be provided to at least two of the one or more individuals present in the vehicle using two or more first output functionalities of the vehicle system. The plurality of first outputs may be determined to provide at least in part different collections of selection options each collection having one or more selection options to different individuals to assist the individuals in the decision-making process in the driving route planning for the journey. The method may also further comprise controlling, by means of the vehicle system, the two or more first output functionalities in accordance with the determined first outputs.

For example, the different first outputs may be adapted based at least in part on the input data related to the respective individuals. In some examples, the third input data of each individual is used to adapt the respective first output which is to be provided to the respective individual. This way individual first outputs can be provided to the individuals in an easy way. For example, a first first output may be determined based at least in part on a third input data of a first individual to whom a first first output functionality (which is controlled in accordance with the determined first first output) is assigned to and a second first output may be determined based at least in part based on a third input data of a second individual to whom a second first output functionality (which is controlled in accordance with the determined second first output) is assigned to.

Receiving selection data may comprise receiving data from a plurality of different devices, especially at least one user device, such as one or more tablet devices and/or one or more cell phone devices, and/or at least one on-vehicle device, such as one or more human-machine-interface device and/or one or more backseat display device.

In this way a collaboration between two or more, especially all, of the individuals is possible in an easy way. For example, each individual may use an individual device to provide selection data, which then is received by the vehicle system from these devices.

Each of the respective devices may be connected to the vehicle system and/or to the control unit, for example via a communication link suitable for bidirectional data transfer.

A user device may be a device assigned to one of the individuals. Especially, such a user device may be a device owned by the respective individual. This is advantageous because many individuals may have already own devices with them.

An on-vehicle device may be installed in the vehicle. For example, said human-machine-interface device or backseat display device may be installed in the vehicle.

However, be it that a device is owned by one of the individuals or be it that a device is installed in the vehicle, in both cases, the respective device may be considered as being part of the vehicle system for the purpose of the present disclosure.

The devices which serve for the individuals to provide selection data may at the same time provide first output functionalities.

Determining the at least one second output may comprise ranking of POI options, respectively, based on the received selection data and/or on data relating to spatial, temporal and/or contextual information associated with the journey. By ranking the POI options, the one or more POI options for the journey may be obtained. The POI options may be obtained by accessing, by means of the vehicle system, at least one internal source and/or remote source, such as at least one map service.

For example, a plurality of possible POI options may be obtained from the remote source. Then by ranking the possible POI options the number of POI options may be limited and/or the order of POI options along the journey may be determined.

The remote source may be accessed via a communication link suitable for bidirectional data transfer provided by the vehicle system (such as a mobile connection).

The method may further comprise receiving, by means of the vehicle system, option data relating to POI options selected by the individuals. The method then also comprises determining, by means of the vehicle system and based on the received option data and/or on a temporary driving route of the journey, at least one third output to be provided to one or more individuals present in the vehicle using at least one third output functionality of the vehicle system. Here, the third output is determined to provide a suggested driving route of the journey associated with the selected POI options. The method then also comprises controlling, by means of the vehicle system, the at least one third output functionality in accordance with the determined third output.

For example, the temporary driving route of the journey may be determined based on a desired start location (e.g., a current location of the vehicle) and a desired destination location (e.g., an event location). The suggested driving route of the journey may be determined based on the temporary driving route of the journey and the received option data. To tis extend, the temporary driving route of the journey may be adapted so as to taking into account the POI options selected by the individuals represented by the option data. Or in other words, the temporary driving route of the journey, which may be a fastest and/or shortest driving route between the desired start location and the desired destination location, may be adapted so that also such POIs are part of the suggested driving route of the journey which were not part of the temporary driving route of the journey. This may result in a suggested driving route of the journey which takes more time and/or is longer than the temporary driving route of the journey.

Controlling the at least one third output functionality in accordance with the determined third output may be performed such that the determined third output is provided to at least one of the one or more individuals (for example to the driver and/or to one or more passengers) by means of the at least one third output functionality.

The determined third output may comprise at least one of a visual, an acoustic, an olfactory and/or a haptic output.

The method may further comprise: Receiving, by means of the vehicle system, feedback from at least one of the individuals present in the vehicle; and Storing the received feedback in a database for use as first input data in future determination of the at least one first output.

The individuals may provide this feedback via some input device of the vehicle system (such as the user device mentioned above).

Each of the first outputs may comprise one or more first type output elements determined based on the first and/or second input data. Alternatively or in addition, each of the first outputs may comprise one or more second type output elements determined based on the third, fourth and/or fifth input data.

The first output elements may be smart filters.

The search interface may comprise smart filters for preselection of search context. These smart filters may account for various characteristics such as travel companions (e.g., kids, bike), mobility restrictions, and more. The system may automatically preselect these filters based on the detected companions within the car. The primary function of smart filters may be to refine and prioritize Points of Interest (POls) based on the preselected characteristics. This may ensure that the search results are highly relevant to the needs and preferences of the passengers. For instance, if the car detects kids as companions, the smart filters will prioritize kid-friendly locations. Similarly, if a bike is detected, the filters will emphasize places with bike trails. Other considerations include mobility accessibility, dog-walking areas, and more. Smart filters may significantly enhance the relevance and usefulness of POI suggestions. By automatically considering the specific needs of the passengers, the search algorithm may prioritize destinations that meet these criteria. For example: Mobility-enabled locations: accessible places for those with mobility restrictions.; dog-walking areas: locations where dogs are allowed; bike trails: POls with available bike paths. This tailored approach may ensure a more efficient and satisfying user experience, as the suggestions are customized to the passengers' specific requirements and preferences.

The second output elements may be icons.

The visual search interface may comprise proactive icons for selecting search criteria. These criteria may encompass various categories such as shopping, eating, sightseeing, entertainment, nature, facilities, activities, health, and their associated subcategories (e.g., for shopping: apparel, groceries, gifts, flowers, etc.). Given the potentially extensive list of categories and subcategories, proactive icons may be designed to simplify the browsing process by displaying and ranking icons based on their relevance to the user's current context and needs. The main function of proactive icons may be to facilitate efficient and relevant selection of search criteria. These icons may be dynamically displayed and prioritized based on the user's immediate goals and context. For example, if the user is heading to a birthday party, icons related to shopping and gifts will be prominently displayed. During lunchtime, restaurant-related icons will be prioritized. Additionally, if any items from the travel checklist are missing, the relevant category icons may be preselected.

Proactive icons may significantly enhance the relevance and efficiency of POI suggestions by tailoring the search criteria to the user's current context and needs. This proactive approach ensures that the most pertinent categories and subcategories may be highlighted, making it easier for users to find the desired POIs. By dynamically adjusting the display and ranking of icons, the system may ensure that users can quickly and easily access the most relevant POIs, leading to a more efficient and satisfying search experience.

Smart filters and proactive icons both may enhance the vehicle's proactive Human-Machine Interface (HMI) but may differ in their approach and impact on POI suggestions. Smart filters may be automatically preselected based on detected companions and their needs (e.g., kids, bike, mobility restrictions), directly tailoring POI suggestions to ensure relevance. In contrast, proactive icons may dynamically adjust the display and ranking of search categories and subcategories based on the user's immediate context and goals (e.g., shopping, eating, sightseeing). This may help users efficiently navigate through extensive lists by highlighting the most relevant options. Thus, smart filters may automatically refine POI results based on who is traveling, proactive icons may guide users to select pertinent categories based on the current situation and activities.

The at least one second output functionality may, for example, be identical to one of the at least one first output functionality. The at least one second output functionality may alternatively or in addition be a stationary on-vehicle device, for example.

For example, the respective second (and first) output functionality may part of a navigation device which is installed in the vehicle. For example, the navigation device is assigned to the driver, which may be one of the individuals.

The at least one third output functionality may, for example, be identical to one of the at least one first output functionality. For example, the third output functionality may be identical to the second output functionality. The at least one third output functionality may alternatively or in addition be a stationary on-vehicle device, for example.

For example, the respective third (and second and first) output functionality may part of said navigation device which is installed in the vehicle.

At least one of the at least one first output functionality may be a mobile device of one of the one or more individuals present in the vehicle.

For example, the mobile device may be assigned to one of the passengers.

According to another aspect of the **disclosed second complex,** a computer program product is provided. The computer program product comprises portions of program code which, when executed by a processor of a control unit of a vehicle system associated with a vehicle, cause the control unit to perform the method as herein provided with respect to the disclosed second complex.

According to another aspect of the **disclosed second complex,** a control unit for a vehicle system associated with a vehicle, is provided. The control unit comprises a processor and a storage device operatively coupled to the processor. The storage device stores portions of program code which, when executed by the processor, cause the control unit to perform the method as herein provided with respect to the disclosed second complex.

According to another aspect of the **disclosed second complex,** a vehicle is provided. The vehicle comprises a vehicle system, the vehicle system comprising a control unit as herein provided with respect to the disclosed second complex and one or more output functionalities operatively coupled to the control unit.

Accordingly, with respect to the **disclosed third complex,** there is provided a method according to item III-1, a computer program product according to item III-12, a control unit for a vehicle system according to item III-13, and a vehicle according to item III-14.

According to an aspect of the **disclosed third complex,** there is provided a method for operating a vehicle system associated with a vehicle. The method comprises receiving, by means of the vehicle system, audio data representing at least in part at least one audio content. The method further comprises determining, by means of the vehicle system and based on one or more characteristics of the audio content represented by the received audio data, at least one output to be provided to at least one individual present in (inside) the vehicle using at least one output functionality of the vehicle system. The method further comprises controlling, by means of the vehicle system, the at least one output functionality in accordance with the determined output.

For example, a family driving in the vehicle may follow to the audio content in form of a story. It is then possible that the mood becomes relaxed due to stimulation by means of the provided output. In addition, this provides the opportunity to pull a family together, induce conversations, and build the memory during a journey.

For example, the audio content represented by the received audio data may to be provided to at least one other output functionality of the vehicle system, such as a sound system.

In the context of the present disclosure "audio content" may apply to the perceptible acoustic output when the audio data is suitably output to an acoustic output functionality (such as a loudspeaker). Hence, "audio content" may apply in some examples to everything that is represented by the audio data in an acoustic manner, such as text, speech, music. The audio content may also comprise everything which can be derived from the acoustic output outputted to an acoustic output functionality of the audio content (such as the loudness, the mood and feelings of a speaker, and so on). However, the audio data may represent in addition to the audio content also information (such as meta data, such as file information) which is not intended and/or even possible in a meaningful way to be outputted via a respective acoustic output functionality.

The method may further comprise analyzing, by means of the vehicle system, the audio content represented by the received audio data and extracting the one or more characteristics of the audio content. In addition the one or more characteristics may comprise at least one of: (A) a type of at least one sequence of the audio content the audio data represents, such as audiobook, music or news; (B) a syntactic and/or a semantic description of at least one sequence of the audio content the audio data represents; and (C) one or more contextual information about at least one sequence of the audio content the audio data represents. The contextual information may relate to characters, objects and/or places occurring in the at least one sequence of the audio content the audio data represents.

For example, a syntactic description of the at least one sequence of the audio content the audio data represents may refer to characteristics relating to one or more phrase, one or more sentence and/or one or more paragraph of the audio content.

For example, a semantic description of the at least one sequence of the audio content the audio data represents may refer to characteristics relating to one or more pause, a story and/or a context of the audio content.

In examples, the at least one audio sequence comprises an audio sequence of suitable length for the purpose of performing the respective analysis. In some examples, the sequence has a length of between 1 second and 100 seconds, such as between 1 second and 60 seconds or between 1 second and 30 seconds. Th sequence may have a length of at least 1 second and/or of at most 100 seconds. For example, the sequence may comprise a suitable number of phrases, sentences and/or paragraphs for the purpose of performing the respective analysis.

In some examples, the method may comprise periodically receiving and/or analyzing of audio data representing at least in part at least one audio content may be carried out along with the periodically extraction of characteristics of the audio content. In this way respective outputs which may vary over time may be determined based on time-dependent set of characteristics.

The contextual information may relate to or represent one or more keywords which describe the audio content or at least the at least one sequence of the audio content in a brief manner.

The method may further comprise determining, by means of the vehicle system and based at least in part on a first group of the characteristics of the audio content represented by the received audio data at least one digital visual content as a first output to be provided to the at least one individual present in the vehicle using at least one first output functionality of the vehicle system. The method may then further comprise controlling, by means of the vehicle system, the at least one first output functionality in accordance with the determined first output.

For example, a digital visual content may comprise at least one still image and/or at least one video sequence.

For example, the first group of the characteristics of the audio content represented by the received audio data may comprise the one or more contextual information about at least one sequence of the audio content the audio data represents.

The first group of characteristics may also comprise further information.

In addition, determining the at least one digital visual content may comprise creating, by means of the vehicle system and based at least in part on the first group of the characteristics of the audio content represented by the received audio data, at least one prompt; querying, by means of the vehicle system, an AI model, such as a generative AI model, with the created prompt; and receiving, by means of the vehicle system, from the generative AI model the at least one digital visual content for use as the first output.

The generative AI model, thus, may provide the respective digital visual content to be provided via the respective output functionality to the one or more individual in response to querying.

The generative AI model may be stored by means of a storage device of the vehicle system. In other examples, the generative AI model may be stored at least partially at a network node external to the vehicle system, so that querying may be carried out via some connection link appropriate for bidirectional data transfer between the vehicle system and the network node.

The method may further comprise determining, by means of the vehicle system and based at least in part on a second group of the characteristics of the audio content represented by the received audio data, at least one ambient light scheme as a second output to be provided to the at least one individual present in the vehicle using at least one second output functionality of the vehicle system. The method may then further comprise controlling, by means of the vehicle system, the at least one second output functionality in accordance with the determined second output.

For example, an ambient light scheme may comprise a sequence of light effects over time (having time-dependent light parameters, such as color, brightness, hue, saturation, etc.). An ambient light scheme may also comprise a fixed choice of light parameters without a time-dependent adaption of any of these parameters.

The ambient light scheme may comprise at least one ambient light color spectrum (for example in this case the second output functionality may output light having a constant and/or time-dependent color as described by the respective spectrum) and/or at least one ambient light effect such as a sunrise, dawn or dusk.

For example, the second group of the characteristics of the audio content represented by the received audio data may comprise the one or more contextual information about at least one sequence of the audio content the audio data represents,

The second group of characteristics may also comprise further information. In some examples, the second group of characteristics may be identical to the first group of characteristics.

In addition, determining the at least one ambient light scheme may comprise accessing, by means of the vehicle system, an ambient light database. The ambient light database may be stored in the storage device of the vehicle system.

Alternatively or in addition, determining the at least one ambient light scheme may comprise creating, by means of the vehicle system and based at least in part on the second group of the characteristics of the audio content represented by the received audio data, at least one prompt; querying, by means of the vehicle system, an AI model, such as a generative AI model, with the created prompt; and receiving, by means of the vehicle system, from the generative AI model the at least one ambient light scheme for use as the second output. The generative AI model, thus, may provide the respective ambient light scheme to be provided via the respective output functionality to the one or more individual in response to querying.

The generative AI model may be stored by means of the storage device of the vehicle system. In other examples, the generative AI model may be stored at least partially at a network node external to the vehicle system, so that querying may be carried out via some connection link appropriate for bidirectional data transfer between the vehicle system and the network node.

The method may further comprise determining, by means of the vehicle system and based at least in part on a third group of the characteristics of the audio content represented by the received audio data, at least one sound scheme as a third output to be provided to the at least one individual present in the vehicle using at least one third output functionality of the vehicle system. The method may then further comprise controlling, by means of the vehicle system, the at least one third output functionality in accordance with the determined third output.

For example, a sound scheme may comprise at least one spatial sound design. In some examples, the respective sound scheme may comprise different sound content for different sound channels of the respective output functionality. This way a multidimensional (such as a 3D) sound experience may be achieved for the individuals in the vehicle.

For example, the **third** group of the characteristics of the audio content represented by the received audio data may comprise the one or more contextual information about at least one sequence of the audio content the audio data represents.

The third group of characteristics may also comprise further information. In some examples, the third group of characteristics may be identical to the first and/or second group of characteristics.

In addition, determining the at least one sound scheme may comprise accessing, by means of the vehicle system, a sound database. The sound database may be stored in the storage device of the vehicle system.

Alternatively or in addition determining the at least one sound scheme may comprise creating, by means of the vehicle system and based at least in part on the **third** group of the characteristics of the audio content represented by the received audio data, at least one prompt; querying, by means of the vehicle system, an Al model, such as a generative Al model, with the created prompt; and receiving, by means of the vehicle system, from the generative Al model the at least one sound scheme for use as the **third output.** The generative Al model, thus, may provide the respective sound scheme to be provided via the respective output functionality to the one or more individual in response to querying.

The generative Al model may be stored by means of the storage device of the vehicle system. In other examples, the generative Al model may be stored at least partially at a network node external to the vehicle system, so that querying may be carried out via some connection link appropriate for bidirectional data transfer between the vehicle system and the network node.

Hence, the method may comprise, in some examples, determining, by means of the vehicle system and based on the one or more characteristics of the audio content represented by the received audio data, two or more outputs to be provided to the at least one individual present in the vehicle using at least two output functionalities of the vehicle system; and controlling, by means of the vehicle system, the two or more output functionalities in accordance with the determined outputs. Preferably if there are N outputs, the vehicle system has means for outputting the N outputs on one or more output functionalities. For example, for each output a distinct output functionality may be used. However, it is also possible that at least one output functionality is used for two or even more than two outputs. In some examples, a single output functionality may comprise a monitor and a loudspeaker. In this case this single output functionality may be used as first and third output functionality at the same time. This is because the first output may be outputted via the monitor to the individuals and the third output may be outputted via the loudspeaker to the individuals. Of course, in other examples, the first and second output may be outputted on one single output functionality while the third output is outputted on another, third output functionality. Or the second and third output may be outputted on one single output functionality while the first output is outputted on another, first output functionality.

The method may further comprise obtaining, by means of the vehicle system, information on at least one of the at least one individual present in the vehicle. For example, this information may be obtained by means of at least one sensor system of the vehicle system (e.g., at least one camera device or at least one proximity sensor provided in one or more seats of the vehicle). This information may be used for example in adapting the respective at least one output to meet preferences of the at least one individual. In some examples the information may relate to the number of individuals present in the vehicle and/or information relating to the type, the age and/or the gender, respectively, of the at least one individual present in the vehicle.

The obtained information may be obtained based on at least one of real-time sensor data obtainable by means of a sensor system of the vehicle system, communication data receivable by means of a communication unit of the vehicle system, and/or historical data storable in a storage device of the vehicle system.

In addition, the method may comprise evaluating the first, second and/or third output in terms of its relevance and/or appropriateness for the at least one individual based on the obtained information; and controlling, by means of the vehicle system, the respective at least one **output functionality** in accordance with a result of the evaluation, especially preventing the respective at least one **output** from being provided to the respective at least one output functionality.

For example, if the obtained information indicates the presence of a child in the vehicle, an output inappropriate for a child may be prevented from being provided to the individuals via the respective output functionality. Instead, the output may be adapted so as to be appropriate for a child (e.g., reducing the maximal loudness).

The method may further comprise obtaining, by means of the vehicle system, additional information on the audio content represented by the audio data, such as at least one audio transcription and/or at least one audio information, respectively, of the audio content represented by the audio data. The additional information may be used in determining the respective at least one output (e.g., the first, second and/or third output) to be provided to the at least one individual present in the vehicle using the respective at least one output functionality (e.g., the first, second and/or third output functionality).

The additional information may be stored by means of the storage device of the vehicle system. In other examples, the additional information may be stored at least partially at a network node external to the vehicle system, so that this additional information may be obtained via some connection link appropriate for bidirectional data transfer between the vehicle system and the network node.

In some examples, the at least one audio transcription may comprise a script of the audio content (especially in case that the audio content relates to a story). In other examples, the at least one audio transcription may comprise lyrics of the audio content (especially in case that the audio content relates to a song).

In some examples, at least one audio information may comprise meta information relating to the audio content represented by the audio data. The audio information may, in some examples, also relate to information which cannot be directly derived from the audio content, such as meta data, for example an author of the audio content, a publisher of the audio content, a publishing time of the audio content and/or an expiration date of the audio content.

In some examples, the audio information may be part of the audio data which part is not intended and/or not suitable for being directly outputted to an acoustic output functionality.

The audio data may be received from at least one audio source. Exemplary audio sources are at least one human-machine-interface device, at least one media player device and/or at least one navigation device.

The audio data may be received via an appropriate data link.

The first output functionality may comprise at least one in-car device having a monitor. The second output functionality may comprise at least one light device. The third output functionality may comprise at least one loudspeaker device, preferably a plurality of loudspeaker devices.

The first output functionality may be a navigation device or a media player device. The light device may be provided in the interior of the vehicle. Preferably, a plurality of light devices is provided as second output functionality. A plurality of loudspeaker devices may be used to provide spatial sound to the at least one individual.

The first, second and/or third output functionality, respectively, may be identical to an output functionality used for outputting the audio content represented by the audio data.

For example, the method may comprise outputting the audio content represented by the audio data on at least one output functionality. This output functionality may comprise at least one loudspeaker device. In some examples, said output functionality is identical to the first, second and/or third output functionality. This way, for example, a media player and/or navigation device (be it an in-vehicle device or a mobile device) may be used for providing output relating to the audio content. The same time the device may also be used for providing the first output, the second output and/or the third output.

According to another aspect of the **disclosed third complex,** a computer program product is provided. The computer program product comprises portions of program code which, when executed by a processor of a control unit of a vehicle system associated with a vehicle, cause the control unit to perform the method as herein provided with respect to the disclosed third complex.

According to another aspect of the **disclosed third complex,** a control unit for a vehicle system associated with a vehicle, is provided. The control unit comprises a processor and a storage device operatively coupled to the processor. The storage device stores portions of program code which, when executed by the processor, cause the control unit to perform the method as herein provided with respect to the disclosed third complex.

According to another aspect of the **disclosed third complex,** a vehicle is provided. The vehicle comprises a vehicle system, the vehicle system comprising a control unit as herein provided with respect to the disclosed third complex and one or more output functionalities operatively coupled to the control unit.

Accordingly, with respect to the **disclosed fourth complex,** there is provided a method according to item IV-1, a computer program product according to item IV-13, a control unit for a vehicle system according to item IV-14, and a vehicle according to item IV-15.

According to an aspect of the **disclosed fourth complex,** there is provided a method for operating a vehicle system associated with a vehicle. The method comprises obtaining, by means of the vehicle system, a record list comprising one or more items of relevance for a journey. The method further comprises determining, by means of the vehicle system, at least one item comprised by the record list but absent from, in other words not present in (inside), the vehicle as non-present item of relevance. The method further comprises determining, by means of the vehicle system, at least one output to be provided to at least one driver of the vehicle using at least one output functionality of the vehicle system, wherein the output comprises information about at least one specific item of the at least one non-present item of relevance. The method further comprises controlling, by means of the vehicle system, the at least one output functionality in accordance with the determined output.

Providing respective output can be suited to influence the driver of the vehicle such that the cognitive load of the driver is reduced. Thus, the driver has increased capacity for driving the vehicle.

In that additional information are comprised by the output for specific items, the driver may particularly focus on these items.

This way, items of relevance for the journey which are already present in the vehicle, do not need further consideration by the driver. Hence, the driver may particularly concentrate on items of relevance for the journey which are absent from or not present in the vehicle. To further assist the driver, the non-present items of relevance only may be presented to the driver (at least one of which may be the specific item).

Even though in the context of the present disclosure, it is stated that the record list comprises items, this does not mean that the record list comprises the items in a somehow physical manner. Instead, the record list may comprise one or more list entries and each of this list entry may comprise information to one item of relevance for the journey. Hence, the record list provides an overview of the respective items.

Controlling the at least one output functionality in accordance with the determined output may be performed such that the determined output is provided to the driver by means of the at least one output functionality. The output may comprise at least one of a visual, an acoustic, an olfactory and/or a haptic output.

Obtaining the record list may comprise obtaining, by means of the vehicle system, at least one information relating to at least one of: at least one information about an event that is the reason for the journey, such as a category, a formal classification, a name, a purpose, a date, a location, a type, a duration and/or an organizer, respectively, of the event, at least one type of a destination location of the journey, at least one weather condition at a destination of the journey; at least one information about a category of a destination of the journey, at least one information about the traffic on a route of the journey, at least one information about a destination of the journey, at least one information about one or more emails of the driver, at least one information available on social media about the driver, at least one information about one or more entries of a calendar of the driver, at least one information about one or more entries of a to-do list of the driver, information about one or more items of relevance of one or more past journeys and/or about one or more specific items of one or more past journeys, information about a behavior of the driver and/or a preference of the driver, at least one information about one or more predefined items to be on board of the vehicle for the journey, at least one information about the vehicle, and/or at least one information about the day. Obtaining the record list then in addition further comprises determining, by means of the vehicle system and based on the at least one obtained information, at least one of the items of relevance for the journey for the record list.

The information may be comprised by data. The data may be at least one of real-time sensor data obtainable by means of a sensor system of the vehicle system, communication data receivable by means of a communication unit of the vehicle system, user input data obtainable via a user interface of the vehicle system, and/or historical data storable in a storage device of the vehicle system. The data may be received at least in part from sources outside of the vehicle system (e.g., stored on some network node) and/or at least in part from sources of the vehicle system.

For example, the types of information which are obtained may be only a part of the different types of information mentioned above.

Determining the at least one item absent from (not present in) the vehicle may comprise attempting to detect, by means of the vehicle system, especially by means of a sensor system, the non-present item of relevance in the vehicle and determining the unsuccessful attempt (due to non-presence of the item of relevance).

For example, detecting may comprise using a sensor system of the vehicle system, such as a wireless detection system. A suitable sensor system may comprise a Bluetooth module for connecting to other Bluetooth devices and/or for detecting other Bluetooth devices. In that an item which is according to the record list expected to be present in the vehicle cannot be detected, the item can be treated as an item which is absent from (not present in) the vehicle. In this case the item may have been forgotten in a building or at some other location outside of the vehicle.

For example, a sensor system may be operable to detect, in real time, the presence of an item to be detected. For this purpose, the sensor system may detect a wireless signal emitted by the item to be detected. For example, a wireless signal comprising a specific signature (for example a unique ID of an item to be detected) which is emitted by the item to be detected may be received by the sensor system. In addition, the detected (thereby received) wireless signal may be analyzed, thereby obtaining the ID by the sensor system. The IDs obtained this way (from one or more items which are present in the vehicle and which preferably have been detected in parallel and/or in sequence) may be checked against the record list. This way it is possible for the vehicle system to determine the items of relevance comprised by the record list which are absent from the vehicle (the record list may comprise for each item its unique ID; Hence, all IDs on the record list which have not been received relate to items which are absent fromthe vehicle).

Alternatively or in addition determining the at least one item absent from (not present in) the vehicle may comprise detecting, by means of a sensor system, the presence of the non-present item of relevance outside the vehicle, such as inside a building.

For example, detecting may comprise using a sensor system (which may not be part of the vehicle system), such as a wireless detection system. A suitable sensor system may comprise a Bluetooth module for connecting to other Bluetooth devices and/or for detecting other Bluetooth devices. In that a presence of an item which is according to the record list expected to be present in the vehicle is detected outside of the vehicle, the item can be treated as an item which is absent from (not present in) the vehicle. In this case the item may have been forgotten in a building or at some other location outside of the vehicle.

The method may further comprise determining, by means of the vehicle system, at least one item comprised by the record list and present in the vehicle as present item of relevance. The output may then also comprise information about at least one of the present items of relevance.

Determining the at least one output may comprise determining, by means of the vehicle system and based on historical data, at least one item of the at least one non-present items of relevance as the at least one specific item.

This way it is possible to weight the importance of the items on the record list. The specific items may, for example, be highlighted in the output compared to the items of relevance which are not determined as specific items.

It may also be possible to display only the one or more specific items to the driver but not the other items of relevance (be them present in the vehicle or not present in the vehicle).

For example, the historical data may be different to the data which formed a data basis for obtaining the record list. But the data basis for obtaining the record list may be at least in part be formed also by at least some of the historical data.

Alternatively or in addition determining the at least one output may comprise determining, by means of the vehicle system and based on the historical data, a recommendation value for at least one item of the at least one non-present items of relevance, and determining, by means of the vehicle system and based on the determined recommendation value, said at least one item as the at least one specific item. In addition, the recommendation value is a measure of the necessity for the respective item to be on board the vehicle for the journey.

For example, it is also possible that for all non-present items of relevance a respective recommendation value is determined. Then, based on the determined recommendation values, the one (or even more than one) specific items is/are determined.

At least two items of the at least one non-present items of relevance may be determined as two or more specific items. Determining the at least one output may comprise ranking the specific items based at least in part on the determined recommendation value of the respective specific items.

For example, the order of characteristic or appearance of the specific items may be determined based on the recommendation value.

At least two items of the at least one non-present items of relevance may be determined as two or more specific items. The number of specific items may be limited to a maximum number which is determined based on the historical data.

For example, the maximum number of specific items may be 3, 5, 10 or 15.

The determined output may comprise information related to the recommendation value for the specific item and/or related to a suggestion to buy the specific item during the journey.

For example, if the determined recommendation value of the specific item is within a predefined range and/or is below or above some threshold, the specific item may be determined to be of high importance to be in the vehicle.

The determined output may be free of, i.e., may comprise no, information about the items of relevance which have not been determined as specific items.

In this case, the items of relevance comprised by the record list which are not determined to be specific items may be hide from the driver so that the driver can focus on the items which have been determined as specific items.

The historical data may comprise information (i) about one or more preferences of the driver and/or of other drivers, (ii) about one or more items of relevance of one or more past journeys and/or about one or more specific items of one or more past journeys, respectively, of the driver and/or other drivers, and/or (iii) about one or more of the determined items of relevance which have been determined as being present in the vehicle during one or more past journeys of the driver and/or other drivers.

The historical data, hence, are a well basis for determining the at least one specific item.

The method may further comprise analyzing, by means of the vehicle system, at least one interaction of the driver with the output functionality. Especially at least one interaction of the driver with the output provided to the output functionality may be analyzed for this purpose.

For this purpose, the output functionality preferably has a touch sensitive display unit. This way the interaction can particularly well be analyzed.

Alternatively or in addition the method may comprise receiving, by means of the vehicle system, feedback from the driver on the relevance of the at least one specific item.

In addition it is also possible that the method comprises receiving, by means of the vehicle system, feedback from the driver on the relevance of at least one item comprised by the record list which is not a specific item. Especially feedback on the relevance of at least one non-present item of relevance which is not a specific item is preferred.

The method may further comprise updating, by means of the vehicle system and based on at least one result of the analysis and/or based on the feedback received from the driver, the historical data. Especially the information about the driver's preference in the historical data may be updated in this way.

This way, in the historical data, which may serve as a data basis for determining the at least one specific item, is updated based on feedback with respect to the determined specific items. Hence, based on a feedback with respect to determined specific items, the historical data is updated so that in upcoming determination of specific items a data basis which considers the feedback may be used.

The method may further comprise determining, by means of the vehicle system and based on selection data related to items among the at least one non-present items of relevance selected by the driver, a driving route for the journey; determining, by means of the vehicle system and based on the determined driving route, at least one further output to be provided to a driver of the vehicle using at least one further output functionality of the vehicle system. The further output may comprise information about the driving route; The method may then further comprise controlling, by means of the vehicle system, the at least one further output functionality in accordance with the determined further output.

For this purpose, the method may also comprise receiving, by means of the vehicle system, selection data related to items among the at least one non-present items of relevance selected by the driver.

For example, information on one or more (maybe even all) of the non-present items of relevance may be comprised by the output. Then a driver may select one or more non-present items of relevance and the information on the selected items is received as selection data.

For example, the items selected by the driver may refer to items which the driver wants to buy during the journey. Therefore, a driving route for the journey has to be taken into account the respective stops suitable for buying the selected items.

Controlling the at least one further output functionality in accordance with the determined further output may be performed such that the determined further output is provided to the driver by means of the at least one further output functionality. The further output functionality may be identical to the output functionality above. The further output may comprise at least one of a visual, an acoustic, an olfactory and/or a haptic output.

According to another aspect of the **disclosed fourth complex,** a computer program product is provided. The computer program product comprises portions of program code which, when executed by a processor of a control unit of a vehicle system associated with a vehicle, cause the control unit to perform the method as herein provided with respect to the disclosed fourth complex.

According to another aspect of the **disclosed fourth complex,** a control unit for a vehicle system associated with a vehicle, is provided. The control unit comprises a processor and a storage device operatively coupled to the processor. The storage device stores portions of program code which, when executed by the processor, cause the control unit to perform the method as herein provided with respect to the disclosed fourth complex.

According to another aspect of the **disclosed fourth complex,** a vehicle is provided. The vehicle comprises a vehicle system, the vehicle system comprising a control unit as herein provided with respect to the disclosed fourth complex and one or more output functionalities operatively coupled to the control unit.

### Brief Description of the Drawings

Further details and advantages of the preferred embodiment of the disclosed **first complex** become clear from the drawings and the detailed description: There is shown in:
- Fig. 1A: a method for operating a vehicle system of a vehicle according to a preferred embodiment;
- Fig. 1B: a vehicle with a vehicle system comprising a control unit according to an embodiment; and
- Fig. 1C: a control unit for a vehicle system according to an embodiment.

Further details and advantages of the preferred embodiment of the disclosed second complex become clear from the drawings and the detailed description: There is shown in:
- Fig. 2A: a method for operating a vehicle system of a vehicle according to a preferred embodiment;
- Fig. 2B: a vehicle with a vehicle system comprising a control unit according to an embodiment; and
- Fig. 2C: a control unit for a vehicle system according to an embodiment.

Further details and advantages of the preferred embodiment of the disclosed third complex become clear from the drawings and the detailed description: There is shown in:
- Fig. 3A: a method for operating a vehicle system of a vehicle according to a preferred embodiment;
- Fig. 3B: a vehicle with a vehicle system comprising a control unit according to an embodiment; and
- Fig. 3C: a control unit for a vehicle system according to an embodiment.

Further details and advantages of the preferred embodiment of the disclosed fourth complex become clear from the drawings and the detailed description: There is shown in:
- Fig. 4A: a method for operating a vehicle system of a vehicle according to a preferred embodiment;
- Fig. 4B: a vehicle with a vehicle system comprising a control unit according to an embodiment; and
- Fig. 4C: a control unit for a vehicle system according to an embodiment.

### Detailed Description of the Disclosure

Referring now to the disclosed **first complex.**

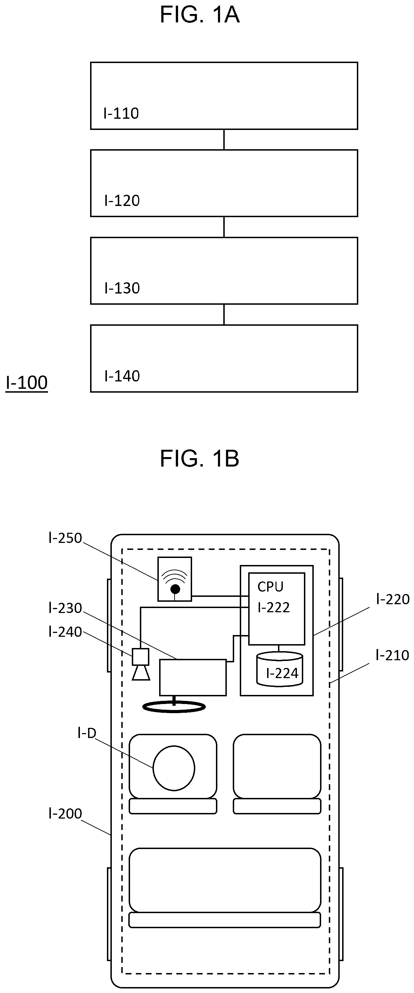

Fig. 1A shows a flow diagram of a method I-100 for operating a system, which here is a vehicle system associated with a vehicle. In some examples, the method I-100 is performed by means of a control unit of the vehicle system.

The method I-100 comprises obtaining, by means of the system, user data relating to at least one user of the system from at least one source, step I-110.

The method I-100 further comprises analyzing, by means of the system, the user data, thereby determining at least one user attribute of the user of the system, step 1-120.

The method I-100 further comprises analyzing, by means of the system, the at least one user attribute, step 1-130.

The method I-100 further comprises controlling, by means of the system, at least one specific element of the system in a first way based at least in part on at least one result of the analysis of the at least one user attribute, step 1-140.

For example, the specific element of the system may be a human-machine-interface or an ambient light unit. The specific element may be arranged within the interior of the vehicle.

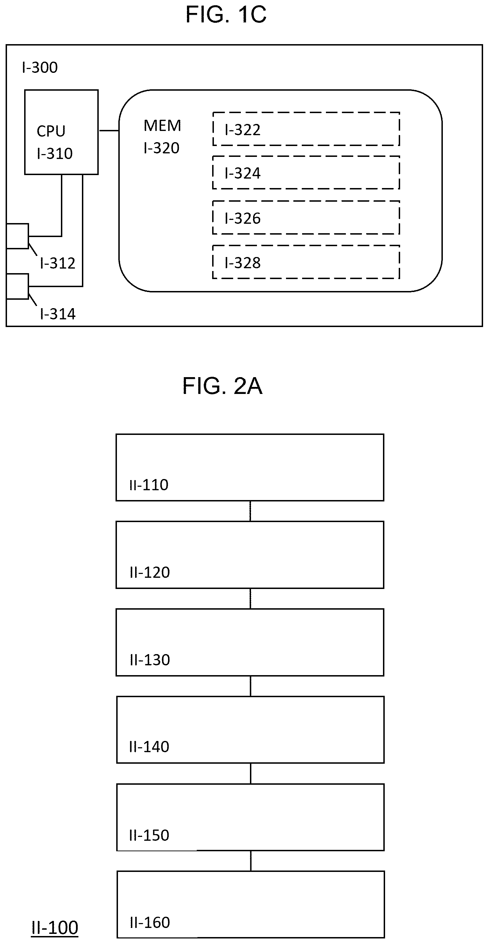

Fig. 1B shows schematically and exemplarily a vehicle I-200. The vehicle I-200 comprises a vehicle system 1-210. The vehicle system I-210 comprises a control unit I-220, which comprises a processor I-222 and a data storage device I-224 operatively connected to the processor I-222. The vehicle system I-210 further comprises a sensor system I-240, exemplarily shown in Fig. 1 as comprising a camera device I-240 for taking pictures of a user of the system I-210, which here is a driver I-D of the vehicle I-200. The vehicle system I-210 further comprises at least one specific element I-230 which is here a human-machine-interface having a touch-sensitive monitor. The human-machine-interface is configured to provide perceivable output, such as visual and/or acoustic output, to the driver I-D. This is achievable, for example, by generating a corresponding control signal by means of the control unit I-220 and outputting the control signal towards the specific element I-230. Notably, in some examples, the output comprises any of a visual, an acoustic, an olfactory and/or a haptic output. In some of the examples, a visual output is provided via a display unit among the specific element I-230 of the vehicle system I-210. Moreover, in some of the examples, an acoustic output is provided via one or more loudspeakers among the specific element I-230 of the vehicle system I-210. In some of the examples, an olfactory output is provided via one or more fragrance dispensers among the specific element I-230 of the vehicle system I-210. Moreover, in some of the examples, a haptic output is provided by means of a force feedback functionality comprised in the steering arrangement, one or more pedals, and/or a vibration device in a seat of the vehicle system I-210, etc.

In the shown example, the vehicle system I-210 also comprises a communication unit I-250 adapted to receive and transmit communication signals, for example, radio signals, over a communication network to which the vehicle system I-210 is wirelessly connected. Each of the output specific element I-230, the sensor I-240, and the communication unit I-250 is operable to be operatively connected to the control unit I-220.

The control unit I-220 is configurable to obtain user data relating to at least one user (such as from driver I-D) of the system I-210 from at least one source. The control unit I-220 is configurable to analyze the user data. In that the user data is analyzed, the control unit I-220 is operable to determine at least one user attribute of the user of the system I-210. Or in other words, at least one result of the analysis may be the at least one user attribute of the user of the system I-210. This analysis can be regarded as a first stage of a multi-stage data processing scheme.

For analyzing the user data, the control unit I-220 may use any type of user data which is available to the vehicle system I-210 and which may be indicative of at least one user attribute of the user of the system I-210. For example, the sensor I-240 may be operable to detect, in real time, one or more user data which may be indicative of one or more user attributes of the user of the system I-210.

The control unit I-220 is configurable to analyze the at least one user attribute. This analysis can be regarded as a second stage of said multi-stage data processing scheme. Of course, there is at least one result of that analysis which then can be used for further actions.

The control unit I-220 is configurable to control at least one specific element of the system I-210 in a first way based at least in part on at least one result of the analysis of the at least one user attribute. Since the multi-stage data processing scheme is applied, hence the control of the specific element is based on the result of the analysis of the second stage, the features to be considered for the control can be extracted over several stages. This enables finer granular control over the respective element.

In some examples, the control unit I-220 is configurable to analyze the user data by using a trained machine learning model (such as a CNN) to which data that is available to the vehicle system I-210 (such as the user data) can be provided as input. In some examples, the trained machine learning model is stored by means of the storage device I-224. In other examples, the trained machine learning model is stored at least partially at a network node external to the vehicle I-200, to which the control unit I-220 is communicatively connectable by means of the communication unit I-250.

In some examples, the control unit I-220 is configurable to analyze the at least one user attribute by using a trained machine learning model (such as a CNN) to which data that is available to the vehicle system I-210 (such as the at least one user attribute) can be provided as input. In some examples, the trained machine learning model is stored by means of the storage device I-224. In other examples, the trained machine learning model is stored at least partially at a network node external to the vehicle I-200, to which the control unit I-220 is communicatively connectable by means of the communication unit I-250.

In some examples, for obtaining user data the control unit I-220 is configurable to sense an environment of the system. For example, the sensor system I-240 can be used for this purpose. The sensor system I-240 may be realized in form of a camera device. The camera device may be part of the system. Particular in case of the vehicle system, a camera already present in the vehicle may be employed for this purpose. Anyway, the sensor system I-240 allows to obtain the user data related to the user of the system. For example, with the camera device at least one image of the user of the system I-210 may be obtained.

In some examples, for obtaining user data the control unit I-220 is configurable to access at least one image of the user stored external to the system I-210. The external stored image may be retrieved for example via communication unit I-250. The external stored image may be at least one image of the user stored on a social media platform.

In some examples, for analyzing the user data the control unit I-220 is configurable to determine based at least in part on the user data, information related to the user's appearance. The determined information may then be used as the at least one user attribute. The user's appearance may be determined for example based on information related to at least one upper body clothing, at least one lower body clothing, at least one hat, at least one cap, at least one eyewear, at least one footwear and/or at least one accessory, respectively, worn by the user.

In addition, a CNN multilabel classifier may be used for analyzing the user data and/or for determining information related to the user's appearance. The CNN multilabel classifier may be a trained machine learning model. In some examples, the trained machine learning model is stored by means of the storage device I-224. In other examples, the trained machine learning model is stored at least partially at a network node external to the vehicle I-200, to which the control unit I-220 is communicatively connectable by means of the communication unit I-250. Alternatively or in addition at least one external fashion dataset may be used for determining information related to the user's appearance. The dataset may be retrieved for example via communication unit I-250.

In some examples, for analyzing the at least one user attribute the control unit I-220 is configurable to determine based at least in part on the user attributes, information related to the user's attributes. The information related to at least one user's attributes may be directed to at least one color, at least one design, at least one pattern, at least one material, at least one brand and/or at least one appearance category, such as formal, casual, edgy and/or professional, respectively, of the user's attribute.

In addition, a CNN multilabel classifier may be used for analyzing the at least one user attribute and/or for determining information related to the user's attributes. The CNN multilabel classifier may be a trained machine learning model. In some examples, the trained machine learning model is stored by means of the storage device I-224. In other examples, the trained machine learning model is stored at least partially at a network node external to the vehicle I-200, to which the control unit I-220 is communicatively connectable by means of the communication unit I-250.

In some examples, for controlling the specific element of the system in the first way the control unit I-220 is configurable to adapt secondary characteristics or appearances of the specific element or parts thereof. Secondary characteristics or appearances may be, for example, at least one color of the specific element or parts thereof.

In some examples, the control unit I-220 is further configurable to store results of consecutive analysis of user attributes in a database. Thereby a database having historical analysis results is formed. The control unit I-220 is further configurable to evaluate one or more of the historical analysis results stored in the database and to control the specific element of the system in a second way based at least in part on at least one result of the evaluation of the historical analysis results.

In some examples, the control unit I-220 is configurable to evaluate the historical analysis results by using a trained machine learning model (such as a CNN) to which data that is available to the vehicle system I-210 (such as the historical data) can be provided as input. In some examples, the trained machine learning model is stored by means of the storage device I-224. In other examples, the trained machine learning model is stored at least partially at a network node external to the vehicle I-200, to which the control unit I-220 is communicatively connectable by means of the communication unit I-250.

In accordance with some of the preceding examples, the user data comprises in some examples at least one of real-time sensor data which has been obtained by means of the sensor system I-240 of the vehicle system I-210. Additionally, or alternatively, in some examples the user data comprises communication data which has been received by means of the communication unit I-250. Additionally, or alternatively, in some examples the control unit I-220 uses historical data for controlling the specific element, such as stored sensor data, where such data has been stored, for example, by means of the storage device I-224.

In some examples, for controlling the specific element of the system in the second way the control unit I-220 is configurable to adapt primary characteristics or appearances of the specific element or parts thereof. Primary characteristics or appearances may be, for example, the displayed number of sub-elements, at least one layout, at least one icon style, at least one shape and/or at least one typography, respectively, of the specific element or parts thereof.

In some examples, the control unit I-220 is further configurable to receive context information related to the context under which the system is currently used. Alternatively or in addition the context information may also relate to the context under which the user currently acts. Examples for such information are at least one users' calendar information, at least one user's route destination, at least one current position of the vehicle and/or at least one map. The control unit I-220 is then also configurable to determine based at least in part on the context information, a first time to start controlling the specific element in the first way. It may in addition or alternatively also be determined a second time to start controlling the specific element in the second way. Anyway, the control unit I-220 is then also configurable to start controlling the specific element in the first and/or second way at the determined first and/or second time.

In some examples, the control unit I-220 is further configurable to receive feedback from the user regarding at least one result of controlling the specific element in the first and/or second way. For example, the user may provide feedback in form of an acceptance and/or a rejection of at least one result of controlling the specific element. Then the control unit I-220 is also configurable to control the specific element in the first and/or second way based further on at least one evaluation of the received feedback.

In some examples, the control unit I-220 is further configurable to control the specific element in the first and/or second way based further on at least one evaluation of at least one of: a visual attention score, a visual similarity score and a content readability score.

In accordance with some of the preceding examples, the specific element comprises at least one ambient light unit and/or at least one human-machine-interface. For example, the human-machine-interface may have at least one touch-sensitive monitor, at least one key and/or at least one knob.

Furthermore, the specific element may comprise in some examples at least one output functionality. The output functionality may be configurable or configured to provide perceivable output, such as visual, acoustic and/or haptic output, to a user of the system, such as a driver of the vehicle.

Fig. 1C shows schematically and exemplarily a control unit I-300 for a system, which is here a vehicle system associated with a vehicle. The control unit I-300 comprises a processor I-310 which is operatively connected to a storage device I-320. The control unit I-300 is configurable to receive and/or output data signals via one or more interfaces I-312, I-314, as schematically indicated in Fig. 1C.

The storage device I-320 stores program code which is executable by means of the processor I-310. The control unit I-300 is implementable by way of an on-board control unit, such as the control unit I-220 of the vehicle system I-210 in Fig. 1B. In other examples, the control unit I-300 is implementable at least partially at one or more network nodes which are in network communication with an on-board vehicle system to receive data from the vehicle system and or output and transmit generated data towards the vehicle system via a communication network.

The storage device I-320 stores portion of program code which, when executed by means of the processor I-310, configure the control unit I-300 to perform operations according to any of the examples described above in connection with Figs. 1A and 1B.

The storage device I-320 stores program code which, by interaction with the processor I-310, constitutes a user data obtaining module I-322 for obtaining user data relating to at least one user of the system from at least one source.

The storage device I-320 further stores program code constituting a user data analyzing module I-324 for analyzing the user data, thereby determining at least one user attribute of the user of the system.

The storage device I-320 further stores program code constituting a user attribute analyzing module I-326 for analyzing the at least one user attribute.

The storage device I-320 further stores program code constituting a specific element controlling module I-328 for controlling at least one specific element of the system in a first way based at least in part on at least one result of the analysis of the at least one user attribute.

Referring now to the disclosed second complex.

Fig. 2A shows a flow diagram of a method II-100 for operating a vehicle system of a vehicle. In some examples, the method II-100 is performed by means of a control unit of the vehicle system.

The method II-100 comprises obtaining, by means of the vehicle system, input data, step II-110.

The method II-100 further comprises determining, by means of the vehicle system and based on the obtained input data, at least one first output to be provided to one or more individuals present in the vehicle for a journey using at least one first output functionality of the vehicle system wherein the first output is determined to provide at least one collection of selection options each collection having one or more selection options to the individuals to assist the individuals in a decision-making process in a driving route planning for the journey, step 11-120.

The method II-100 further comprises controlling, by means of the vehicle system, the at least one first output functionality in accordance with the determined first output, step II-130.

The method II-100 further comprises receiving, by means of the vehicle system, selection data relating to selection options selected by the individuals, step II-140.

The method II-100 further comprises determining, by means of the vehicle system and based on the received selection data, at least one second output to be provided to at least one of the one or more individuals present in the vehicle using at least one second output functionality of the vehicle system wherein the second output is determined to provide one or more POI options for the journey to the at least one individual to assist the individuals in the decision-making process in the driving route planning for the journey, step 11-150.

The method II-100 further comprises controlling, by means of the vehicle system, the at least one second output functionality in accordance with the determined second output, step II-160.

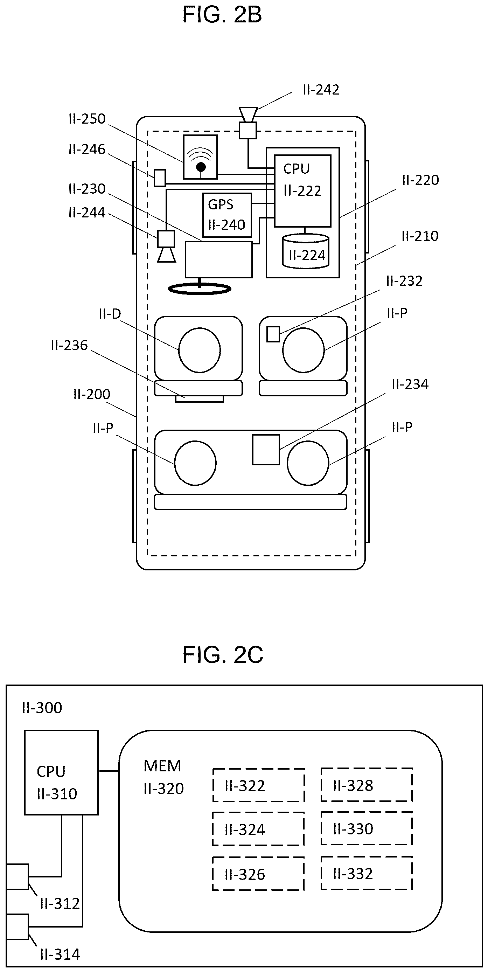

Fig. 2B shows schematically and exemplarily a vehicle II-200. The vehicle II-200 comprises a vehicle system II-210. The vehicle system II-210 comprises a control unit II-220, which comprises a processor II-222 and a data storage device II-224 operatively connected to the processor II-222. The vehicle system II-210 further comprises a sensor system II-240, II-242, II-244, II-246, exemplarily shown in Fig. 1 as comprising a position sensor II-240, such as a GPS module, for determining a position of the vehicle II-200, a front camera II-242 for detecting objects in an environment in front of the vehicle II-200, an in-vehicle camera II-244 for monitoring an interior of the vehicle along with the individuals in the vehicle II-200, such as the driver II-D of the vehicle II-200 and the three passengers II-P of the vehicle I I-200. The vehicle system 11-210 further comprises at least one first output functionality, here a first output functionality II-230 assigned to the driver II-D, a first output functionality II-232 (such as a mobile phone device) assigned to a first passenger II-P, a first output functionality II-234 (such as a tablet device) assigned to a second passenger II-P and a first output functionality II-236 (such as a back-seat device) assigned to a third passenger II-P. The first output functionalities II-230, II-232, II-234, I I-236 are configured to provide perceivable output, such as visual output, to the driver II-D and the passengers II-P. A second output functionality and a third output functionality, both, are identical to the first output functionality II-230.

In the shown example, the vehicle system II-210 also comprises a communication unit II-250 adapted to receive and transmit communication signals, for example, radio signals, over a communication network to which the vehicle system II-210 is wirelessly connected. Each of the output functionalities II-230, II-232, II-234, II-236, the sensors II-240, II-242, II-244, II-246, and the communication unit II-250 is operable to be operatively connected to the control unit II-220.

The control unit II-220 is configurable to obtain input data. The control unit II-220 is configurable to determine based on the obtained input data at least one first output to be provided to one or more individuals II-D, II-P present in the vehicle II-200 for a journey using at least one first output functionality II-230, II-232, II-234, II-236 of the vehicle system II-210. Even though, in the present scenario, there are four first output functionalities II-230, II-232, II-234, II-236. However, in other scenarios there can be less or more first output functionalities. In addition, each of the first outputs is determined to provide at least one collection of selection options to the individuals II-D, II-P to assist the individuals II-D, II-P in a decision-making process in a driving route planning for the journey. Each collection has one or more selection options. The control unit II-220 is configurable to control the at least one first output functionality II-230, II-232, II-234, II-236 in accordance with the determined first output.

For determining the first output, the control unit II-220 may use any type of input data which is available to the vehicle system II-210. In one example, the vehicle system II-210 automatically obtains the input data. In this case, there is no action required of any one of the individuals II-D, II-P. For example, the input data may be indicative of at least one environmental information (e.g., weather information and/or time information), at least one vehicle information (e.g., companion information and/or item information) and/or at least one navigation information (e.g. location information, route information and/or traffic information). For example, the sensor II-240, II-242, II-244 and/or II-246 may be operable to detect, in real time, one or more input data which may be indicative of one or more of said information.

In some examples, the control unit II-220 is configurable to determine the at least one first output by using a trained machine learning model to which data that is available to the vehicle system II-210 (such as the obtained input data) can be provided as input. In some examples, the trained machine learning model is stored by means of the storage device II-224. In other examples, the trained machine learning model is stored at least partially at a network node external to the vehicle II-200, to which the control unit II-220 is communicatively connectable by means of the communication unit II-250.

In an example, the position sensor II-240 is operable to detect a present position of the vehicle II-200. In combination with cartographic information, which, for example, is stored in the storage device II-224 in connection with a navigation application of the vehicle system 11-210, the detected position of the vehicle II-200 is indicative of one or more possible road trajectories lying ahead of the vehicle II-200. In addition, location-specific data, such as topographical objects, local weather information, etc., may be contained in the cartographic information. In some examples, such location-specific data may be operable to be updated based on information which is received by means of the communication unit II-250.

In addition, in some examples, image data acquired by means of the front camera II-242 is operable to be used to determine one or more of a weather condition, a lighting condition, a sight condition, a time of day, a season, etc. Each of these information types may be used as input data by the control unit II-224 in determining the first output.

In accordance with some of the preceding examples, the input data comprises in some examples at least one of real-time sensor data which has been obtained by means of a sensor system, such as sensors II-240, II-242, II-244, II-246, of the vehicle system II-210. Additionally, or alternatively, in some examples the input data comprises communication data which has been received by means of the communication unit II-250. Additionally, or alternatively, in some examples the control unit II-220 uses historical data for determining input data, such as stored sensor data and/or stored trajectories of previous travels made by the driver II-D with the vehicle II-200, where such data has been stored, for example, by means of the storage device II-224.

The determined first output are operable to be provided to the driver II-D and the passengers II-P via the one or more first output functionalities II-230, II-232, II-234, II-236. This is achievable, for example, by generating corresponding control signals by means of the control unit II-220 and outputting the control signals towards the respective first output functionalities II-230, II-232, II-234, II-236. In some examples, at least two of the first outputs are different, as described in greater detail below. In some examples, each of the first outputs is provided via different first output functionalities. This way it is easily possible that there is provided an individual first output to each individual IID, II-P. This makes it particular easy to perform a collaborative decision-making process.

In some examples, the first outputs comprise any of a visual, an acoustic, an olfactory and/or a haptic output. In some of the examples, a visual output is provided via a display unit among the one or more first output functionalities II-230, II-232, II-234, II-236 of the vehicle system II-210. Moreover, in some of the examples, an acoustic output is provided via one or more loudspeakers among the one or more first output functionalities II-230, II-232, II-234, II-236 of the vehicle system II-210. In some of the examples, an olfactory output is provided via one or more fragrance dispensers among the one or more first output functionalities II-230, II-232, II-234, II-236 of the vehicle system II-210. Moreover, in some of the examples, a haptic output is provided by means of a force feedback functionality comprised in the steering arrangement, one or more pedals, and/or a vibration device in a seat of the vehicle system II-210, etc.

The control unit II-220 is configurable to receive selection data relating to selection options selected by the individuals. The control unit II-220 is configurable to determine based on the received selection data at least one second output to be provided to at least one of the one or more individuals II-D, II-P present in the vehicle II-200 using at least one second output functionality II-230 of the vehicle system II-210. In addition, the second output is determined to provide one or more POI options for the journey to the at least one individual II-D, II-P to assist the individuals II-D, II-P in the decision-making process in the driving route planning for the journey. A POI means a point of interest and may be for example a location for lunch during the journey.

The control unit 11-220 is configurable to control the at least one second output functionality II-230 in accordance with the determined second output.

Even though, in the present scenario the output functionality 11-230 is a first output functionality and a second output functionality at the same time (namely the output functionality II-230 assigned to the driver II-D), it may in other examples also be possible that a distinct output functionality is used only as second output functionality.

The determined second output is operable to be provided to the driver II-D and/or the passengers II-P via the one or more second output functionality II-230. This is achievable, for example, by generating corresponding control signals by means of the control unit 11-220 and outputting the control signals towards the respective second output functionality II-230.

In some examples, the second outputs comprise any of a visual, an acoustic, an olfactory and/or a haptic output. In some of the examples, a visual output is provided via a display unit among the one or more second output functionalities II-230, 11-232, 11-234, II-236 of the vehicle system II-210. Moreover, in some of the examples, an acoustic output is provided via one or more loudspeakers among the one or more second output functionalities II-230, II-232, II-234, II-236 of the vehicle system II-210. In some of the examples, an olfactory output is provided via one or more fragrance dispensers among the one or more second output functionalities II-230, II-232, II-234, II-236 of the vehicle system II-210. Moreover, in some of the examples, a haptic output is provided by means of a force feedback functionality comprised in the steering arrangement, one or more pedals, and/or a vibration device in a seat of the vehicle system II-210, etc.

In some examples, the control unit 220 is configurable to determine the at least one second output by using a trained machine learning model to which data that is available to the vehicle system II-210 (such as the received selection data) can be provided as input. In some examples, the trained machine learning model is stored by means of the storage device II-224. In other examples, the trained machine learning model is stored at least partially at a network node external to the vehicle II-200, to which the control unit II-220 is communicatively connectable by means of the communication unit II-250.

In some examples, for obtaining input data the control unit II-220 may be configurable to obtain first input data related to information on one or more entities present in the vehicle II-200, such as the one or more individuals II-D, II-P. Even though in the present scenario the four entities are four individuals (the driver II-D and three passengers II-P), there may be other scenarios where more or less individuals are present in the vehicle II-200.

In addition, for obtaining first input data the control unit II-220 may be configurable to sense an in-vehicle environment. This way first input data may be obtained. The vehicle environment may be an interior of the vehicle II-200. Sensing may be performed by means of a sensor system II-240, II-242, II-244 and/or II-246. Exemplary sensor systems are a camera device II-242, II-244, a microphone device II-246 and/or a proximity sensor. A proximity sensor may be part of a seat of the vehicle 11-200 so that it can be detected if a seat is occupied by an individual.

In some examples, for obtaining input data the control unit II-220 may be configurable to obtain second input data related to information on status information of the vehicle 11-200 and/or related to traffic information relevant for the journey. One example for said status information is a charge status of the vehicle II-200. In addition, for obtaining second input data the control unit II-220 may be configurable to sense parts of the vehicle and/or accessing traffic information from at least one navigation system and/or from at least one remote source. This way second input data may be obtained. Sensing may be performed by means of a sensor system II-240, II-242, 11-244 and/or 11-246. Another example for a sensor system may be a battery sensor which provides a charging status of a battery of the vehicle II-200.

In some examples, for obtaining input data the control unit II-220 may be configurable to obtain based on historical data third input data related to information on at least one of the one or more individuals II-D, II-P present in the vehicle II-200. In some examples the historical data may be stored in a database and/or relate to previous interests, previous preferences and/or previous visits associated with the respective at least one individual II-D, II-P.

In some examples, for obtaining input data the control unit II-220 may be configurable to obtain fourth input data relating to contextual information of the planned journey. In some examples, for obtaining fourth input data the control unit II-220 is configurable to access calendar information of one or more calendar entries, of at least one of the one or more individuals II-D, II-P present in the vehicle II-200, accessing weather information, accessing current position information, accessing destination information and/or accessing traffic information relevant for the journey. Said calendar information may comprise time, destination and/or content, respectively, of one or more calendar entries, of at least one of the one or more individuals II-D, II-P present in the vehicle II-200.

In some examples, for obtaining input data the control unit II-220 may be configurable to receive fifth input data in form of voice input from at least one of the one or more individuals II-D, II-P present in the vehicle II-200. The received voice input may be translated into suitable form, thereby generating fifth input data. In some examples, for receiving fifth input data the control unit II-220 is configurable to sense an in-vehicle environment, thereby obtaining the voice input. The in-vehicle environment may be an interior of the vehicle II-200. Sensing may be performed by means of a sensor system, such as a sensor system in form of a microphone device II-246.

In some examples, the control unit II-220 is further configurable to determine based on the obtained input data a plurality of first outputs each to be provided to at least two of the one or more individuals II-D, II-P present in the vehicle II-200 using two or more first output functionalities II-230, II-232, II-234, II-236 of the vehicle system II-210. In addition, the plurality of first outputs is determined to provide at least in part different collections of selection options each collection having one or more selection options to different individuals II-D, II-P to assist the individuals II-D, II-P in the decision-making process in the driving route planning for the journey. The control unit II-220 is then further configurable to control the two or more first output functionalities II-230, II-232, II-234, II-236 in accordance with the determined first outputs.

For example, a first output determined to provide a first collection of selection options to the driver II-D, a second output determined to provide a second collection of selection options to a first passenger II-P, a third output determined to provide a third collection of selection options to a second passenger II-P, a fourth output determined to provide a fourth collection of selection options to a third passenger II-P may be all different. This may be the case since determining the first outputs lead to different outputs due to the input data.

In some examples, at least two of the determined first outputs are different. In some examples, each of the first outputs is provided via different first output functionalities. This way it is easily possible that there is provided an individual first output to each individual I I-D, II-P. This makes it particular easy to perform a collaborative decision-making process.

In some examples, for receiving selection data the control unit II-220 is configurable to receive data from a plurality of different devices, such as devices II-230, II-232, II-234, II-236 which at the same time act as input functionalities. These different devices may be two user devices II-232, II-234 (in form of a cell phone device II-232 assigned to one of the passengers II-P and a tablet device II-234 assigned to one of the passengers II-P) and two on-vehicle device II-230, II-236 (in form of a human-machine-interface device II-230 assigned to the driver II-D and a back-seat display device I I-236 assigned to one of the passengers II-P).

In some examples, for determining the at least one second output the control unit II-220 is configurable to rank POI options, respectively, based on the received selection data and/or on data relating to spatial, temporal and/or contextual information associated with the journey. This way the one or more POI options for the journey may be obtained. In addition, for obtaining the POI options the control unit II-220 may be configurable to access at least one internal source and/or remote source, such as at least one map service.

In some examples, the control unit II-220 is further configurable to receive option data relating to POI options selected by the individuals. The control unit II-220 is then further configurable to determine based on the received option data and/or on a temporary driving route of the journey, at least one third output to be provided to one or more individuals II-D, II-P present in the vehicle 11-200 using at least one third output functionality 11-230 of the vehicle system II-200. The third output is determined to provide a suggested driving route of the journey associated with the selected POI options. The control unit II-220 is then further configurable to control the at least one third output functionality II-230 in accordance with the determined third output.

Even though, in the present scenario, there is one third output functionality II-230. However, in other scenarios there can be more than one third output functionality.

Even though, in the present scenario the output functionality 11-230 is a first output functionality, a second output functionality and a third output functionality at the same time (namely the output functionality II-230 assigned to the driver II-D), it may in other examples also be possible that a distinct output functionality is used only as third output functionality.

If the third output functionality is assigned to the driver II-D, the third output can easily be used for assisting in navigation the vehicle II-200.

In some examples, the control unit II-220 is further configurable to receive feedback from at least one of the individuals II-D, II-P present in the vehicle 11-200. The control unit II-220 is then further configured to store the received feedback in a database for use as first input data in future determination of the at least one first output. The database may be stored in storage device 11-224 and/or in a memory outside of the vehicle system 11-210.

For example, a feedback may be entered by the individuals via devices II-230, II-232, II-234, II-236 which not only provide output functionalities but also means for entering said feedback.

In accordance with some of the preceding examples, each of the first outputs comprises one or more first type output elements determined based on the first and/or second input data and/or one or more second type output elements determined based on the third, fourth and/or fifth input data. For example, first type output elements may be smart filters. For example, second type output elements may be icons.

In accordance with some of the preceding examples, the at least one second output functionality II-230 is identical to one of the at least one first output functionality II-230 and/or is a stationary on-vehicle device.

In accordance with some of the preceding examples, the at least one third output functionality II-230 is identical to one of the at least one first output functionality II-230, especially to the second output functionality II-230, and/or is a stationary on-vehicle device.

In accordance with some of the preceding examples, at least one of the at least one first output functionality II-232, II-234 is a mobile device of one of the one or more individuals II-P present in the vehicle.

Fig. 2C shows schematically and exemplarily a control unit II-300 for a vehicle system of a vehicle. The control unit II-300 comprises a processor II-310 which is operatively connected to a storage device II-320. The control unit II-300 is configurable to receive and/or output data signals via one or more interfaces II-312, II-314, as schematically indicated in Fig. 2C.

The storage device II-320 stores program code which is executable by means of the processor II-310. The control unit II-300 is implementable by way of an on-board control unit, such as the control unit II-220 of the vehicle system II-210 in Fig. 2B. In other examples, the control unit II-300 is implementable at least partially at one or more network nodes which are in network communication with an on-board vehicle system to receive data from the vehicle system and or output and transmit generated data towards the vehicle system via a communication network.

The storage device II-320 stores portion of program code which, when executed by means of the processor II-310, configure the control unit II-300 to perform operations according to any of the examples described above in connection with Figs. 2A and 2B.

The storage device II-320 stores program code which, by interaction with the processor II-310, constitutes an input data obtaining module II-322 for obtaining input data.

The storage device II-320 further stores program code constituting a first output determining module I I-324 for determining based on the obtained input data, at least one first output to be provided to one or more individuals present in the vehicle for a journey using at least one first output functionality of the vehicle system wherein the first output is determined to provide at least one collection of selection options each collection having one or more selection options to the individuals to assist the individuals in a decision-making process in a driving route planning for the journey.

The storage device II-320 further stores program code constituting a first output functionality controlling module II-326 for controlling the at least one first output functionality in accordance with the determined first output.

The storage device II-320 further stores program code constituting a selection data receiving module II-328 for receiving selection data relating to selection options selected by the individuals.

The storage device II-320 further stores program code constituting a second output determining module II-330 for determining based on the received selection data at least one second output to be provided to at least one of the one or more individuals present in the vehicle using at least one second output functionality of the vehicle system wherein the second output is determined to provide one or more POI options for the journey to the at least one individual to assist the individuals in the decision-making process in the driving route planning for the journey.

The storage device II-320 further stores program code constituting a second output functionality controlling module II-332 for controlling the at least one second output functionality in accordance with the determined second output.

Referring now to the disclosed **third** complex.

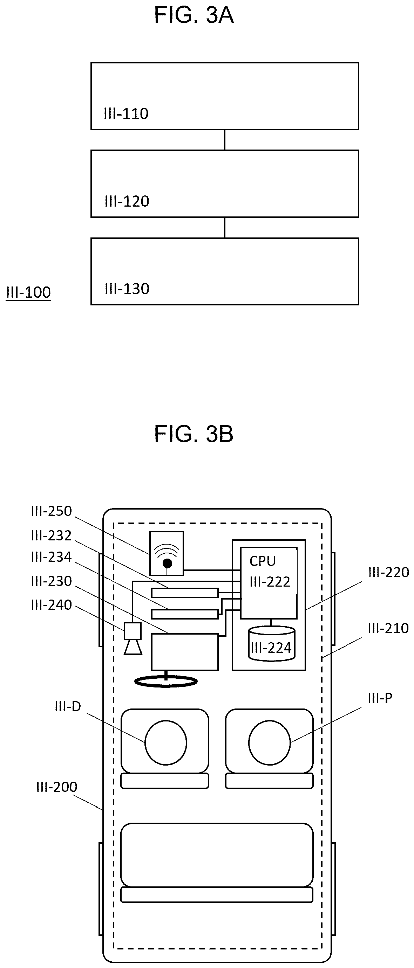

Fig. 3A shows a flow diagram of a method III-100 for operating a vehicle system of a vehicle. In some examples, the method III-100 is performed by means of a control unit of the vehicle system.

The method III-100 comprises receiving, by means of the vehicle system, audio data representing at least in part at least one audio content, step III-110.

The method III-100 further comprises determining, by means of the vehicle system and based on one or more characteristics of the audio content represented by the received audio data, at least one output to be provided to at least one individual present in the vehicle using at least one output functionality of the vehicle system, step III-120.

The method III-100 further comprises controlling, by means of the vehicle system, the at least one output functionality in accordance with the determined output, step III-130.

Fig. 3B shows schematically and exemplarily a vehicle III-200. The vehicle III-200 comprises a vehicle system III-210. The vehicle system III-210 comprises a control unit III-220, which comprises a processor III-222 and a data storage device III-224 operatively connected to the processor III-222. The vehicle system III-210 further comprises a sensor system III-240, exemplarily shown in Fig. 3A as comprising a camera device III-240 for monitoring an interior of the vehicle III-200, including the individuals present in the vehicle III-200, such as a driver III- D of the vehicle III-200 and a passenger III-P. The vehicle system III-210 further comprises at least one first output functionality III-230 configured to provide perceivable output (such as visual output) output to the individuals, among them to the driver III-D and the passenger III-P. The vehicle system III-210 further comprises at least one second output functionality III-232 configured to provide perceivable output (such as light output) to the individuals, among them to the driver III-D and the passenger III-P. The vehicle system III-210 further comprises at least one third output functionality III-234 configured to provide perceivable output (such as acoustic output) to the individuals, among them to the driver III-D and the passenger III-P.

In the shown example, the vehicle system III-210 also comprises a communication unit III-250 adapted to receive and transmit communication signals, for example, radio signals, over a communication network to which the vehicle system III-210 is wirelessly connected. Each of the output functionalities III-230, III-232, III-234, the sensor III-240, and the communication unit III-250 is operable to be operatively connected to the control unit III-220.

The control unit III-220 is configurable to receive audio data representing at least in part at least one audio content.

The control unit III-220 may use any type of data which is available to the vehicle system III-210 and which is representing audio content as the respective audio data. For example, a media player device which is provided as in-vehicle device in the vehicle III-200 and/or which is with one of the at least one individual may be used as a source of respective audio data from which source the audio data are received by the control unit III-220. The audio data may alternatively or in addition also be received from a source extern to the vehicle III-200 via communication unit III-250.

The control unit III-220 is configurable to determine based on one or more characteristics of the audio content represented by the received audio data, at least one output to be provided to at least one individual III-D, III-P present in the vehicle III-200 using at least one output functionality III-230, III-232, III-234 of the vehicle system III-210. The control unit III-220 is configurable to control the at least one output functionality III-230, III-232, III-234 in accordance with the determined output.

In some examples, the control unit III-220 is configurable to determine the at least one output by using a trained machine learning model to which data that is available to the vehicle system II-210 (such as the obtained audio data or any data derived from the audio data) can be provided as input. In some examples, the trained machine learning model is stored by means of the storage device III-224. In other examples, the trained machine learning model is stored at least partially at a network node external to the vehicle III-200, to which the control unit III-220 is communicatively connectable by means of the communication unit III-250.

In some examples, the control unit III-220 is further configurable to analyze the audio content represented by the received audio data and extract the one or more characteristics of the audio content. In addition, the one or more characteristics may comprise at least one of: (A) a type of at least one sequence of the audio content the audio data represents, such as audiobook, music or news; (B) a syntactic and/or a semantic description of at least one sequence of the audio content the audio data represents; and (C) one or more contextual information about at least one sequence of the audio content the audio data represents.

Contextual information may relate for example to persons acting in a story of the audio content or to a location on which an action mentioned in a story of the audio content takes place.

In some examples, the control unit III-220 is configurable to analyze the audio content and to extract the one or more characteristics of the audio content at least in part by using a trained machine learning model to which data that is available to the vehicle system III-210 (such as the obtained audio data) can be provided as input. In some examples, the trained machine learning model is stored by means of the storage device III-224. In other examples, the trained machine learning model is stored at least partially at a network node external to the vehicle III-200, to which the control unit III-220 is communicatively connectable by means of the communication unit III-250.

In some examples, the control unit III-220 is further configurable to determine based at least in part on a first group of the characteristics of the audio content represented by the received audio data at least one digital visual content as a first output to be provided to the at least one individual present in the vehicle using at least one first output functionality III-230 of the vehicle system III-210. For example, the first group of the characteristics of the audio content represented by the received audio data may comprise the one or more contextual information about at least one sequence of the audio content the audio data represents. The control unit III-220 is then further configurable to control the at least one first output functionality III-230 in accordance with the determined first output.

In some examples, for determining the at least one digital visual content the control unit III-220 may be configurable to create based at least in part on the first group of the characteristics of the audio content represented by the received audio data at least one prompt. The control unit III-220 is then further configurable to query a generative AI model with the created prompt. The control unit III-220 is then further configurable to receive from the generative AI model the at least one digital visual content for use as the first output. In some examples, the generative AI model is stored by means of the storage device III-224. In other examples, the generative AI model is stored at least partially at a network node external to the vehicle III-200, to which the control unit III-220 is communicatively connectable by means of the communication unit III-250.

In some examples, the control unit III-220 is further configurable to determine based at least in part on a second group of the characteristics of the audio content represented by the received audio data at least one ambient light scheme, especially comprising at least one ambient light color spectrum and/or at least one ambient light effect such as a sunrise, dawn or dusk, as a second output to be provided to the at least one individual present in the vehicle using at least one second output functionality III-232 of the vehicle system III-210. For example, the second group of the characteristics of the audio content represented by the received audio data may comprise the one or more contextual information about at least one sequence of the audio content the audio data represents. The control unit III-220 is then further configurable to control the at least one second output functionality III-232 in accordance with the determined second output.

In some examples, for determining the at least one ambient light scheme the control unit III-220 may be configurable to access an ambient light database. Alternatively or in addition, for determining the at least one ambient light scheme the control unit III-220 may be configurable to create based at least in part on the second group of the characteristics of the audio content represented by the received audio data, at least one prompt. The control unit III-220 is then further configurable to query a generative AI model with the created prompt. The control unit III-220 is then further configurable to receive from the generative AI model the at least one ambient light scheme for use as the second output. In some examples, the generative AI model is stored by means of the storage device III-224. In other examples, the generative AI model is stored at least partially at a network node external to the vehicle III-200, to which the control unit III-220 is communicatively connectable by means of the communication unit III-250.

In some examples, the control unit III-220 is further configurable to determine based at least in part on a third group of the characteristics of the audio content represented by the received audio data at least one sound scheme as a third output to be provided to the at least one individual present in the vehicle using at least one third output functionality III-234 of the vehicle system III-210. For example, the third group of the characteristics of the audio content represented by the received audio data may comprise the one or more contextual information about at least one sequence of the audio content the audio data represents. The control unit III-220 is then further configurable to control the at least one third output functionality III-234 in accordance with the determined third output.

In some examples, for determining the at least one sound scheme the control unit III-220 may be configurable to access a sound database. Alternatively or in addition, for determining the at least one sound scheme the control unit III-220 may be configurable to create based at least in part on the third group of the characteristics of the audio content represented by the received audio data, at least one prompt. The control unit III-220 is then further configurable to query a generative AI model with the created prompt. The control unit III-220 is then further configurable to receive from the generative AI model the at least one sound scheme for use as the third output. In some examples, the generative AI model is stored by means of the storage device III-224. In other examples, the generative AI model is stored at least partially at a network node external to the vehicle III-200, to which the control unit III-220 is communicatively connectable by means of the communication unit III-250.

Hence, in exemplary embodiments, the control unit III-220 may be configurable to determine based on the one or more characteristics of the audio content represented by the received audio data, two or more outputs to be provided to the at least one individual III-D, III-P present in the vehicle using at least two output functionalities III-230, III-232, III-234 of the vehicle system III-210. The control unit III-220 may then be further configured to control the two or more output functionalities in accordance with the determined outputs. Preferably if there are N outputs, the vehicle system III-210 has means for outputting the N outputs on one or more output functionalities III-230, III-232, III-234. For example, for each output a distinct output functionality may be used (e.g., first output on first output functionality, second output on second output functionality, third output on third output functionality, and so on). However, it is also possible that at least one output functionality is used for two or even more than two outputs. In some examples, a single output functionality may comprise a monitor device and a loudspeaker device. Examples for such an output functionality may be an on-vehicle navigation device. In this case this single output functionality may be used as first and third output functionality at the same time. This is because the first output may be outputted via the monitor of that output functionality to the individuals and the third output may be outputted via the loudspeaker of that output functionality to the individuals. Of course, in other examples, and generally speaking, the first and second output may be outputted on one single output functionality while the third output is outputted on another, third output functionality. Or the second and third output may be outputted on one single output functionality while the first output is outputted on another, first output functionality.

The determined at least one output (especially the first output, the second output and/or the third output) may be operable to be provided to the individuals III-D, III-P present in the vehicle via the one or more output functionalities III-230, III-232, III-234. This is achievable, for example, by generating a corresponding control signal by means of the control unit III-220 and outputting the control signal towards the respective one or more output functionality III-230, III-232, III-234.

In some examples, the control unit III-220 is further configurable to obtain information on at least one of the at least one individual III-D, III-P present in the vehicle III-200. For this purpose, the control unit III-220 may use any type of data which is available to the vehicle system III-210 and which is suitable to obtain respective information on at least one of the at least one individual III-D, III-P present in the vehicle III-200. For example, the control unit III-220 may use at least one of real-time sensor data obtainable by means of the sensor system III-240 of the vehicle system III-210, communication data receivable by means of the communication unit III-250 of the vehicle system III-210, and/or historical data storable in the storage device II-224 of the vehicle system III-210. Examples for said information may be the number of individuals III-D, III-P present in the vehicle III-200 and/or information relating to the type, the age and/or the gender, respectively, of the at least one individual III-D, III-P present in the vehicle. For example, the sensor III-240 may be operable to detect, in real time, one or more of said information. Ine some examples, image data acquired by means of the camera III-240 is operable to be used to determine In other examples, approaching sensors provided in the seats of the vehicle III-200 may be used as sensor system so that the presence of individuals in the vehicle III-200 may be detected, hence, the number of individuals present in the vehicle III-200.

In accordance with some of the preceding examples, the information may be obtained by the vehicle system III-210 based on real-time sensor data which has been obtained by means of a sensor system, such as sensor III-240, of the vehicle system III-210. Additionally, or alternatively, in some examples the information may be obtained by the vehicle system III-210 based on communication data which has been received by means of the communication unit III-250. Additionally, or alternatively, in some examples the control unit III-220 uses historical data, such as stored sensor data and/or stored trajectories of previous travels made by the driver III-D with the vehicle III-200, where such data has been stored, for example, by means of the storage device III-224.

In some examples, the control unit III-220 is further configurable to evaluate the first, second and/or third output in terms of its relevance and/or appropriateness for the at least one individual based on the obtained information. The control unit III-220 is then further configured to control the respective at least one output functionality III-230, III-232, III-234 in accordance with a result of the evaluation, especially preventing the respective at least one output from being provided to the respective at least one output functionality III-230, III-232, III-234.

In some examples, the control unit III-220 is further configurable to obtain additional information on the audio content represented by the audio data. For this purpose, the control unit III-220 may use any type of data which is available to the vehicle system III-210 and which is suitable to obtain respective additional information. For example, the control unit III-220 may use data receivable by means of the communication unit III-250 of the vehicle system III-210. Examples for said information may be at least one audio transcription and/or at least one audio information, respectively, of the audio content represented by the audio data. The additional information may then be used in determining the respective at least one output to be provided to the at least one individual III-D, III-P present in the vehicle III-200 using the respective at least one output functionality III-230, III-232, III-234.

In accordance with some of the preceding examples, the audio data is received from at least one audio source, such as at least one human-machine-interface device, at least one media player device and/or at least one navigation device.

In accordance with some of the preceding examples, the first output functionality III-230 comprises at least one in-car device having a monitor, the second output functionality III-232 comprises at least one light device and/or the third output functionality III-234 comprises at least one loudspeaker device, preferably a plurality of loudspeaker devices (which especially allow for multidimensional sound effects to be provided to the individual III-D, III-P in the vehicle III-200).

It is noted that a single device (such as an in-vehicle navigation device and/or an in-vehicle media player device) may realize one or more than one output functionalities at the same time. For example, an in-vehicle navigation device may comprise a monitor and a loudspeaker so that a first and a third output functionality may be provided by means of such a single device.

In accordance with some of the preceding examples, the first, second and/or third output functionality III-230, III-232, III-234, respectively, is identical to an output functionality used for outputting the audio content represented by the audio data.

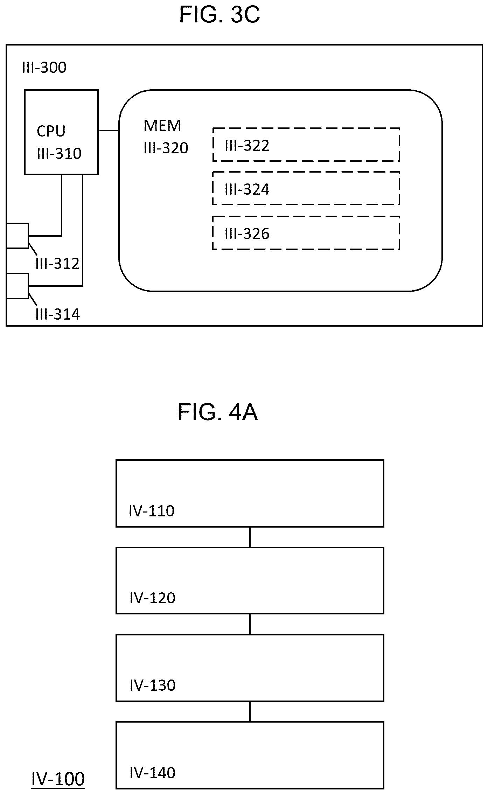

Fig. 3C shows schematically and exemplarily a control unit III-300 for a vehicle system of a vehicle. The control unit III-300 comprises a processor III-310 which is operatively connected to a memory device III-320. The control unit III-300 is configurable to receive and/or output data signals via one or more interfaces III-312, III-314, as schematically indicated in Fig. 3C.

The storage device III-320 stores program code which is executable by means of the processor III-310. The control unit III-300 is implementable by way of an on-board control unit, such as the control unit III-220 of the vehicle system III-210 in Fig. 3B. In other examples, the control unit III-300 is implementable at least partially at one or more network nodes which are in network communication with an on-board vehicle system to receive data from the vehicle system and or output and transmit generated data towards the vehicle system via a communication network.

The storage device III-320 stores portion of program code which, when executed by means of the processor III-310, configure the control unit III-300 to perform operations according to any of the examples described above in connection with Figs. 3A and 3B.

The storage device III-320 stores program code which, by interaction with the processor 310, constitutes an audio data receiving module III-322 for receiving audio data representing at least in part at least one audio content.

The storage device III-320 further stores program code constituting an output determining module III-324 for determining, based on one or more characteristics of the audio content represented by the received audio data, at least one output to be provided to at least one individual present in the vehicle using at least one output functionality of the vehicle system.

The storage device III-320 further stores program code constituting am output functionality controlling module III-326 for controlling the at least one output functionality in accordance with the determined output.

Referring now to the disclosed **fourth complex.**

Fig. 4A shows a flow diagram of a method IV-100 for operating a vehicle system of a vehicle. In some examples, the method IV-100 is performed by means of a control unit of the vehicle system.

The method IV-100 comprises obtaining, by means of the vehicle system, a record list comprising one or more items of relevance for a journey, step VI-110.

The method IV-100 further comprises determining, by means of the vehicle system, at least one item comprised by the record list but absent from or not present in the vehicle as non-present item of relevance, step IV-120.

The method VI-100 further comprises determining, by means of the vehicle system, at least one output to be provided to at least one driver of the vehicle using at least one output functionality of the vehicle system, step IV-130. The output comprises information about at least one specific item of the at least one non-present item of relevance.

The method VI-100 further comprises controlling, by means of the vehicle system, the at least one output functionality in accordance with the determined output, step IV-140.

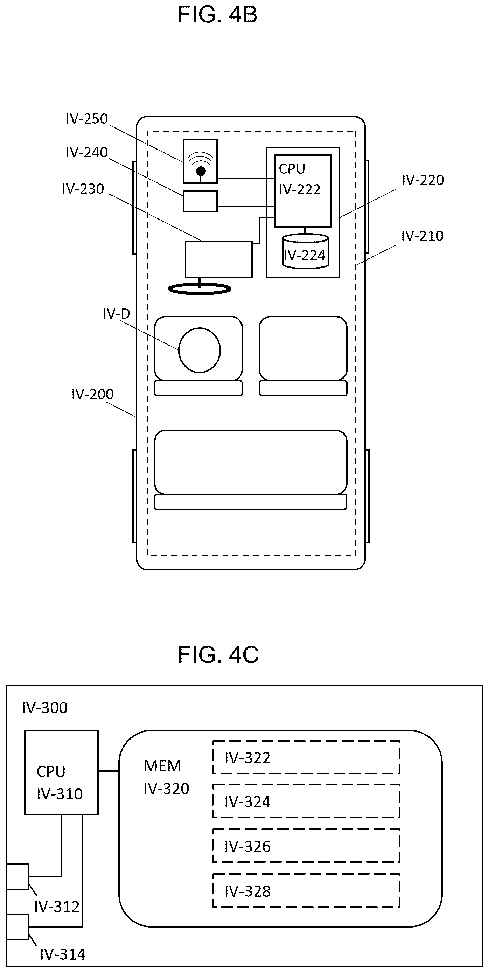

Fig. 4B shows schematically and exemplarily a vehicle IV-200. The vehicle IV-200 comprises a vehicle system IV-210. The vehicle system IV-210 comprises a control unit IV-220, which comprises a processor IV-222 and a data storage device IV-224 operatively connected to the processor IV-222. The vehicle system IV-210 further comprises a sensor system IV-240, exemplarily shown in Fig. 4B as comprising an item detecting module IV-240, such as a Bluetooth module, for detecting the presence of an item in the vehicle IV-200. The vehicle system IV-210 further comprises at least one output functionality IV-230 configured to provide perceivable output, such as visual, acoustic and/or haptic output, to a driver IV-D of the vehicle IV-200. In the shown example, the vehicle system IV-210 also comprises a communication unit IV-250 adapted to receive and transmit communication signals, for example, radio signals, over a communication network to which the vehicle system IV-210 is wirelessly connected. Each of the output functionality IV-230, the sensor IV-240, and the communication unit IV-250 is operable to be operatively connected to the control unit IV-220.

The control unit IV-220 is configurable to obtain a record list comprising one or more items of relevance for a journey. The control unit IV-220 is configurable to determine at least one item comprised by the record list but absent from (not present in) the vehicle IV-200 as non-present item of relevance. The control unit IV-220 is configurable to determine at least one output to be provided to at least one driver IV-D of the vehicle IV-200 using at least one output functionality IV-230 of the vehicle system IV-210, wherein the output comprises information about at least one specific item of the at least one non-present item of relevance. The control unit IV-220 is configurable to control the at least one output functionality IV-230 in accordance with the determined output.

The determined at least one output may be operable to be provided to the driver IV-D in the vehicle via the output functionality IV-230. This is achievable, for example, by generating a corresponding control signal by means of the control unit IV-220 and outputting the control signal towards the respective output functionality IV-230.

In some of the examples, a visual output is provided via a display unit (especially a touch-sensitive display unit) of the output functionality IV-230 of the vehicle system IV-210.

In some examples, for obtaining the record list the control unit IV-220 may be configurable to obtain at least one information relating to at least one of: at least one information about an event that is the reason for the journey, such as a category, a formal classification, a name, a purpose, a date, a location, a type, a duration and/or an organizer, respectively, of the event, at least one type of a destination location of the journey, at least one weather condition at a destination of the journey; at least one information about a category of a destination of the journey, at least one information about the traffic on a route of the journey, at least one information about a destination of the journey, at least one information about one or more emails of the driver IV-D, at least one information available on social media about the driver IV-D, at least one information about one or more entries of a calendar of the driver IV-D, at least one information about one or more entries of a to-do list of the driver IV-D, information about one or more items of relevance of one or more past journeys and/or about one or more specific items of one or more past journeys, information about a behavior of the driver IV-D and/or a preference of the driver IV-D, at least one information about one or more predefined items to be on board of the vehicle IV-200 for the journey, at least one information about the vehicle IV-200, and/or at least one information about the day. The control unit IV-220 is then further configurable to determine, based on the at least one obtained information, at least one of the items of relevance for the journey for the record list.

The respective information may be represented by input data and the control unit IV-220 may be configurable to receive such input data. The control unit IV-220 may use any type of data which is available to the vehicle system IV-210 and which is representing respective information as the respective input data. The input data may alternatively or in addition also be received at least in part from a source extern to the vehicle IV-200 via the communication unit IV-250.

For example, the control unit IV-220 may use at least one of real-time sensor data obtainable by means of the sensor system IV-240 of the vehicle system IV-210, communication data receivable by means of the communication unit IV-250 of the vehicle system IV-210, and/or historical data storable in the storage device IV-224 of the vehicle system IV-210 as the input data. Additionally, or alternatively, in some examples the control unit IV-220 uses stored sensor data and/or stored trajectories of previous travels made by the driver IV-D with the vehicle IV-200, where such data has been stored, for example, by means of the storage device IV-224, as the input data.

In an example, a position sensor (not shown in Fig. 4B) of the vehicle system IV-210 is operable to detect a present position of the vehicle IV-200. In combination with cartographic information, which, for example, is stored in the storage device IV-224 in connection with a navigation application of the vehicle system IV-210, the detected position of the vehicle IV-200 is indicative of one or more possible road trajectories lying ahead of the vehicle IV-200 which may be used as input data. In addition, location-specific data, such as topographical objects, local weather information, etc., may be contained in the cartographic information and may be used as input data as well. In some examples, such location-specific data may be operable to be updated based on information which is received by means of the communication unit IV-250 and may be used by the trained machine learning model in obtaining the information (or the input data representing that information).

In addition, in some examples, image data acquired by means of a front camera (not shown in Fig. 4B) of the vehicle system IV-210 is operable to be used to determine one or more of a weather condition, a lighting condition, a sight condition, a time of day, a season, etc. Each of these information may be used as information for obtaining the record list.

In some examples, for obtaining the at least one information the control unit IV-220 may be configurable to analyze the input data. In some examples, the control unit IV-220 is configurable to obtain the information (e.g. by analyzing the input data) at least in part by using a trained machine learning model to which data that is available to the vehicle system IV-210 (such as the received input data) can be provided as input. In some examples, the trained machine learning model is stored by means of the storage device IV-224. In other examples, the trained machine learning model is stored at least partially at a network node external to the vehicle IV-200, to which the control unit IV-220 is communicatively connectable by means of the communication unit IV-250.

In some examples, for determining the at least one item absent from (not present in) the vehicle IV-200 the control unit IV-220 may be configurable to attempt to detect (especially by means of a sensor system such as sensor system IV-240, the non-present item of relevance in the vehicle and to determine the unsuccessful attempt. Alternatively or in addition, for determining the at least one item not present in the vehicle IV-200 the control unit IV-220 may be configurable to detect the presence of the non-present item of relevance outside the vehicle, such as inside a building.

For example, the sensor system IV-240 may be operable to detect, preferably in real time, the presence of a (general) item to be detected. For this purpose, the sensor system IV-240 may detect a wireless signal emitted by the respective item to be detected. For example, a wireless signal comprising a specific signature (for example a unique ID of an item to be detected) which is emitted by the item to be detected may be received by the sensor system IV-240. In addition, the detected (thereby received) wireless signal may be analyzed, thereby obtaining the ID by the sensor system IV-240. The IDs obtained this way (from one or more items which are present in the vehicle IV-200) may be checked against the record list. This way it is possible for the vehicle system IV-210 to determine the items of relevance comprised by the record list which are absent from or not present in the vehicle IV-200.

In some examples, for determining the at least one output the control unit IV-220 may be configurable to determine, based on historical data, at least one item of the at least one non-present items of relevance as the at least one specific item. In addition, the control unit IV-220 may be configurable to determine the at least one specific item at least in part by using a trained machine learning model to which data that is available to the vehicle system IV-210 (such as the historical data) can be provided as input. In some examples, the trained machine learning model is stored by means of the storage device IV-224. In other examples, the trained machine learning model is stored at least partially at a network node external to the vehicle IV-200, to which the control unit IV-220 is communicatively connectable by means of the communication unit IV-250. The historical data may be stored in the storage device IV-224, for example.

In some examples, for determining the at least one output the control unit IV-220 may be configurable to determine, based on the historical data, a recommendation value for at least one item of the at least one non-present items of relevance. The recommendation value here is a measure of the necessity for the respective item to be on board the vehicle IV-200 for the journey. The control unit IV-220 may then be configurable to determine, based on the determined recommendation value, said at least one item as the at least one specific item. In addition, the control unit IV-220 may be configurable to determine the recommendation value and/or the at least one specific item at least in part by using a trained machine learning model to which data that is available to the vehicle system IV-210 (such as the historical data) can be provided as input. In some examples, the trained machine learning model is stored by means of the storage device IV-224. In other examples, the trained machine learning model is stored at least partially at a network node external to the vehicle IV-200, to which the control unit IV-220 is communicatively connectable by means of the communication unit IV-250.

In accordance with some of the preceding examples, at least two items of the at least one non-present items of relevance are determined as two or more specific items. For determining the at least one output the control unit IV-220 may be configurable to rank the specific items based at least in part on the determined recommendation value of the respective specific items.

In accordance with some of the preceding examples, at least two items of the at least one non-present items of relevance are determined as two or more specific items. The number of specific items may be limited to a maximum number which may be determined based on the historical data.

In accordance with some of the preceding examples, the determined output comprises information related to the recommendation value for the specific item and/or related to a suggestion to buy the specific item during the journey.

In accordance with some of the preceding examples, the determined output is free of, i.e., comprises no, information about the items of relevance which have not been determined as specific items.

In accordance with some of the preceding examples, the historical data comprises information (i) about one or more preferences of the driver IV-D and/or of other drivers, (ii) about one or more items of relevance of one or more past journeys and/or about one or more specific items of one or more past journeys, respectively, of the driver IV-D and/or other drivers, and/or (iii) about one or more of the determined items of relevance which have been determined as being present in the vehicle IV-200 during one or more past journeys of the driver IV-D and/or other drivers.

In some examples, the control unit IV-220 is further configurable to analyze at least one interaction of the driver IV-D with the output functionality IV-230. One example for such an interaction may be at least one interaction of the driver IV-D with the output provided to the output functionality IV-230. Alternatively or in addition, the control unit IV-220 is further configurable to receive feedback from the driver on the relevance of the at least one specific item. The feedback may be received via a voice input device (such as a microphone) and/or via a touch sensitive display device (which may be comprised by the output functionality IV-230). The control unit IV-220 may then be configurable to update, based on at least one result of the analysis and/or based on the feedback received from the driver, the historical data. This way it is particularly preferred to update the information about the driver's preference (which may form at least one part of the historical data).

In some examples, the control unit IV-220 is further configurable to determine, based on selection data related to items among the at least one non-present items of relevance selected by the driver IV-D, a driving route for the journey. The control unit IV-220 is then further configurable to determine, based on the determined driving route, at least one further output to be provided to the driver IV-D of the vehicle IV-200 using at least one further output functionality IV-230 of the vehicle system IV-210. The further output comprises information about the driving route. The control unit IV-220 is then further configurable to control the at least one further output functionality IV-230 in accordance with the determined further output.

The determined at least one further output may be operable to be provided to the driver IV-D in the vehicle IV-200 via the further output functionality IV-230. This is achievable, for example, by generating a corresponding control signal by means of the control unit IV-220 and outputting the control signal towards the respective further output functionality IV-230.

In the example shown in Fig. 4B, the output functionality and the further output functionality are identical (the output functionality IV-230). However, in other examples, there may be two different output functionalities used for the output functionality and the further output functionality.

In accordance with some of the preceding examples, the output functionality IV-230 is identical to an output functionality comprised by an on-vehicle navigation device of the vehicle system IV-210.

In accordance with some of the preceding examples, the output functionality IV-230 may comprise a human-machine-interface. Preferably the output functionality IV-230 may comprise a touch-sensitive display unit. This way the respective output can be provided to the driver IV-D via the display unit and in addition an interaction between the driver IV-D and the output functionality IV-230 and/or the output may be analyzed.

Fig. 4C shows schematically and exemplarily a control unit IV-300 for a vehicle system of a vehicle. The control unit IV-300 comprises a processor IV-310 which is operatively connected to a memory device IV-320. The control unit IV-300 is configurable to receive and/or output data signals via one or more interfaces IV-312, IV-314, as schematically indicated in Fig. 4C.

The storage device IV-320 stores program code which is executable by means of the processor IV-310. The control unit IV-300 is implementable by way of an on-board control unit, such as the control unit IV-220 of the vehicle system IV-210 in Fig. 4B. In other examples, the control unit IV-300 is implementable at least partially at one or more network nodes which are in network communication with an on-board vehicle system to receive data from the vehicle system and or output and transmit generated data towards the vehicle system via a communication network.

The storage device IV-320 stores program code which, when executed by means of the processor IV-310, configure the control unit IV-300 to perform operations according to any of the examples described above in connection with Figs. 4A and 4B.

The storage device IV-320 stores program code which, by interaction with the processor IV-310, constitutes a record list obtaining module IV-322 for obtaining a record list comprising one or more items of relevance for a journey.

The storage device IV-320 further stores program code constituting a non-present item determining module IV-324 for determining at least one item comprised by the record list but absent from or not present in the vehicle as non-present item of relevance.

The storage device IV-320 further stores program code constituting an output determining module IV-326 for determining at least one output to be provided to at least one driver of the vehicle using at least one output functionality of the vehicle system. The output here comprises information about at least one specific item of the at least one non-present item of relevance.

The storage device IV-320 further stores program code constituting an output functionality controlling module IV-328 for controlling the at least one output functionality in accordance with the determined output.

### Items describing complexes I to IV of the disclosures:

Item I:
   Item I-1. Method for operating a system, especially a vehicle system associated with a vehicle, the method comprising:
      - **obtaining,** by means of the system, **user data** relating to at least one user of the system from at least one source;
      - **analyzing,** by means of the system, **the user data,** thereby determining at least one user attribute of the user of the system;
      - **analyzing,** by means of the system, **the at least one user attribute;**
         and
      - **controlling,** by means of the system, **at least one specific element** of the system in a **first way** based at least in part on at least one result of analyzing the at least one user attribute.
   Item I-2. The method according to item I-1, wherein obtaining user data comprises:
      - sensing, by means of a sensor system such as a camera device, an environment of the system, thereby obtaining the user data related to the user of the system, especially obtaining at least one image of the user of the system;
         and/or
      - accessing, by means of the system, at least one image of the user stored external to the system, such as at least one image of the user stored on a social media platform.
   Item I-3. The method according to any one of items I-1 to I-2, wherein **analyzing the user data** comprises:
      - determining, by means of the system, based at least in part on the user data, information related to the user's appearance, and using the determined information as the at least one user attribute,
      wherein preferably a CNN Multilabel classifier is used for analyzing the user data and/or for determining information related to the user's appearance and/or at least one external fashion dataset is used for determining information related to the user's appearance.
   Item I-4. The method according to any one of items I-1 to I-3, wherein **analyzing the at least one user attribute** comprises:
      - determining, by means of the system, based at least in part on the user attributes, information related to the user's attributes,
      wherein preferably a CNN Multilabel classifier is used for analyzing the at least one user attribute and/or for determining information related to the user's attributes.
   Item I-5. The method according to any one of items I-1 to I-4, wherein **controlling the specific element** of the system in the first way comprises adapting, by means of the system, secondary characteristics of the specific element or parts thereof, such as at least one color of the specific element or parts thereof.
   Item I-6. The method according to any one of items I-1 to I-5, wherein the method comprises:
      - storing, by means of the system, results of consecutive analysis of user attributes in a database, thereby forming a database having historical analysis results;
      - evaluating, by means of the system, one or more of the historical analysis results stored in the database;
         and
      - **controlling,** by means of the system, **the specific element** of the system in a **second way** based at least in part on at least one result of the evaluation of the historical analysis results.
   Item I-7. The method according to item I-6, wherein **controlling the specific element** of the system in the second way comprises adapting, by means of the system, primary characteristics of the specific element or parts thereof, such as the displayed number of sub-elements, at least one layout, at least one icon style, at least one shape and/or at least one typography, respectively, of the specific element or parts thereof.
   Item I-8. The method according to any one of items I-1 to I-7, wherein the method comprises:
      - receiving, by means of the system, context information related to the context under which the system is currently used and/or under which the user currently acts, such as at least one users' calendar information, at least one user's route destination, at least one current position of the vehicle, at least one map, at least one traffic density and/or at least one road type;
      - determining, by means of the system, based at least in part on the context information, a first time to start controlling the specific element in the first way and/or a second time to start controlling the specific element in the second way;
         and
      - start, by means of the system, controlling the specific element in the first and/or second way at the determined first and/or second time.
   Item I-9. The method according to any one of items I-1 to I-8, wherein the method comprises:
      - receiving, by means of the system, feedback from the user regarding at least one result of controlling the specific element in the first and/or second way, such as an acceptance and/or a rejection of at least one result of controlling the specific element;
         and
      - controlling, by means of the system, the specific element in the first and/or second way based further on at least one evaluation of the received feedback.
   Item I-10. The method according to any one of items I-1 to I-9, wherein the method comprises:
      - controlling, by means of the system, the specific element in the first and/or second way based further on at least one evaluation of at least one of: a visual attention score, a visual similarity score and a content readability score.
   Item I-11. The method according to any one of items I-1 to I-10, wherein the specific element comprises at least one ambient light unit and/or at least one human-machine-interface, especially having at least one touch-sensitive monitor, at least one key and/or at least one knob.
   Item 1-12. The method according to any one of items I-1 to I-11, wherein the specific element comprises at least one output functionality, which is configurable to provide perceivable output, such as visual, acoustic and/or haptic output, to a user of the system, such as a driver of the vehicle.
   Item 1-13. Computer program product comprising portions of program code which, when executed by a processor of a control unit of a system, especially a vehicle system associated with a vehicle, cause the control unit to perform the method according to any one of items I-1 to 1-12.
   Item I-14. Control unit for a system, especially a vehicle system associated with a vehicle, the control unit comprising a processor and a storage device operatively coupled to the processor, wherein the storage device stores portions of program code which, when executed by the processor, cause the control unit to perform the method according to any one of items I-1 to I-12.
   Item I-15. Vehicle comprising a vehicle system, the vehicle system comprising:
      - a control unit according to item I-14; and
      - one or more specific elements, such as human-machine-interfaces and/or ambient light units, operatively coupled to the control unit.
Item II:
   Item II-1. Method for operating a vehicle system associated with a vehicle, the method comprising:
      - obtaining, by means of the vehicle system, input data;
      - determining, by means of the vehicle system and based on the obtained input data, at least one first output to be provided to one or more individuals present in the vehicle for a journey using at least one first output functionality of the vehicle system wherein the first output is determined to provide at least one collection of selection options each collection having one or more selection options to the individuals to assist the individuals in a decision-making process in a driving route planning for the journey;
      - controlling, by means of the vehicle system, the at least one first output functionality in accordance with the determined first output;
      - receiving, by means of the vehicle system, selection data relating to selection options selected by the individuals;
      - determining, by means of the vehicle system and based on the received selection data, at least one second output to be provided to at least one of the one or more individuals present in the vehicle using at least one second output functionality of the vehicle system wherein the second output is determined to provide one or more POI options for the journey to the at least one individual to assist the individuals in the decision-making process in the driving route planning for the journey;
         and
      - controlling, by means of the vehicle system, the at least one second output functionality in accordance with the determined second output.
   Item II-2. Method according to item II-1, wherein obtaining input data comprises:
      - obtaining, by means of the vehicle system, first input data related to information on one or more entities present in the vehicle, such as the one or more individuals,
         wherein preferably obtaining first input data comprises: sensing, by means of a sensor system, an in-vehicle environment, thereby obtaining the first input data;
         and/or
      - obtaining, by means of the vehicle system, **second input data** related to information on status information of the vehicle, such as a charge status of the vehicle, and/or related to traffic information relevant for the journey,
      wherein preferably obtaining second input data comprises: sensing, by means of a sensor system, parts of the vehicle, and/or accessing traffic information from at least one navigation system and/or from at least one remote source, thereby obtaining the second input data.
   Item II-3. Method according to any one of items II-1 to II-2, wherein obtaining input data comprises:
      - obtaining, by means of the vehicle system and based on historical data, **third input data** related to information on at least one of the one or more individuals present in the vehicle,
         wherein preferably the historical data are stored in a database and/or relates to previous interests, previous preferences and/or previous visits associated with the respective at least one individual;
      - obtaining, by means of the vehicle system, **fourth input data** relating to contextual information of the planned journey,
         wherein preferably obtaining fourth input data comprises accessing calendar information, especially comprising time, destination and/or content, respectively, of one or more calendar entries, of at least one of the one or more individuals present in the vehicle, accessing weather information, accessing current position information, accessing destination information and/or accessing traffic information relevant for the journey;
         and/or
      - receiving, by means of the vehicle system, **fifth input data** in form of voice input from at least one of the one or more individuals present in the vehicle and translating the voice input into suitable form thereby generating fifth input data,
      wherein preferably receiving fifth input data comprises: sensing, by means of a sensor system, an in-vehicle environment, thereby obtaining the voice input.
   Item II-4. Method according to any one of items II-1 to II-3, wherein the method comprises:
      - determining, by means of the vehicle system and based on the obtained input data, a plurality of first outputs each to be provided to at least two of the one or more individuals present in the vehicle using two or more first output functionalities of the vehicle system,
         wherein the plurality of first outputs is determined to provide at least in part different collections of selection options each collection having one or more selection options to different individuals to assist the individuals in the decision-making process in the driving route planning for the journey;
         and
      - controlling, by means of the vehicle system, the two or more first output functionalities in accordance with the determined first outputs.
   Item II-5. Method according to any one of items II-1 to II-4, wherein **receiving selection data** comprises receiving data from a plurality of different devices, especially at least one user device, and/or at least one on-vehicle device, such as one or more human-machine-interface device and/or one or more backseat display device.
   Item II-6. Method according to any one of items II-1 to II-5, wherein **determining the at least one second output** comprises ranking of POI options, respectively, based on the received selection data and/or on data relating to spatial, temporal and/or contextual information associated with the journey, thereby obtaining the one or more POI options for the journey,
      wherein preferably the POI options are obtained by accessing, by means of the vehicle system, at least one internal source and/or remote source, such as at least one map service.
   Item II-7. Method according to any one of items II-1 to II-6, wherein the method comprises:
      - receiving, by means of the vehicle system, option data relating to POI options selected by the individuals;
      - determining, by means of the vehicle system and based on the received option data and/or on a temporary driving route of the journey, at least one third output to be provided to one or more individuals present in the vehicle using at least one third output functionality of the vehicle system,
         wherein the third output is determined to provide a suggested driving route of the journey associated with the selected POI options;
         and
      - controlling, by means of the vehicle system, the at least one third output functionality in accordance with the determined third output.
   Item II-8. Method according to any one of items II-1 to II-7, wherein the method comprises:
      - receiving, by means of the vehicle system, feedback from at least one of the individuals present in the vehicle;
         and
      - storing the received feedback in a database for use as first input data in future determination of the at least one first output.
   Item II-9. Method according to any one of items II-1 to II-8, wherein each of the first outputs comprises one or more first type output elements determined based on the first and/or second input data and/or one or more second type output elements determined based on the third, fourth and/or fifth input data.
   Item II-10. Method according to any one of items II-1 to II-9, wherein the at least one second output functionality is identical to one of the at least one first output functionality and/or is a stationary on-vehicle device.
   Item II-11. Method according to any one of items II-1 to II-10, wherein the at least one third output functionality is identical to one of the at least one first output functionality, especially to the second output functionality, and/or is a stationary on-vehicle device.
   Item II-12. Method according to any one of items II-1 to II-11, wherein at least one of the at least one first output functionality is a mobile device of one of the one or more individuals present in the vehicle.
   Item II-13. Computer program product comprising portions of program code which, when executed by a processor of a control unit of a vehicle system associated with a vehicle, cause the control unit to perform the method according to any one of items II-1 to II-12.
   Item II-14. Control unit for a vehicle system, the control unit comprising a processor and a storage device operatively coupled to the processor, wherein the storage device stores portions of program code which, when executed by the processor, cause the control unit to perform the method according to any one of items II-1 to II-12.
   Item II-15. Vehicle comprising a vehicle system, the vehicle system comprising:
      - a control unit according to item II-14, and
      - one or more output functionalities operatively coupled to the control unit.
Item III:
   Item III-1. Method for operating a vehicle system associated with a vehicle, the method comprising:
      - receiving, by means of the vehicle system, audio data representing at least in part at least one audio content;
      - determining, by means of the vehicle system and based on one or more characteristics of the audio content represented by the received audio data, at least one output to be provided to at least one individual present in the vehicle using at least one output functionality of the vehicle system;
         and
      - controlling, by means of the vehicle system, the at least one output functionality in accordance with the determined output.
Item III-2. Method according to item III-1, wherein the method comprises:
   - analyzing, by means of the vehicle system, the audio content represented by the received audio data and extracting the one or more characteristics of the audio content;
      wherein preferably the one or more characteristics comprises at least one of:
      - a type of at least one sequence of the audio content the audio data represents;
      - a syntactic and/or a semantic description of at least one sequence of the audio content the audio data represents; and/or
      - one or more contextual information about at least one sequence of the audio content the audio data represents.
Item III-3. Method according to any one of the items III-1 to III-2, wherein the method comprises:
   - determining, by means of the vehicle system and based at least in part on a **first** group of the characteristics of the audio content represented by the received audio data,
      wherein preferably the **first** group of the characteristics of the audio content represented by the received audio data comprises the one or more contextual information about at least one sequence of the audio content the audio data represents,
      at least one digital visual content as a **first output** to be provided to the at least one individual present in the vehicle using at least one **first output functionality** of the vehicle system;
      and
   - controlling, by means of the vehicle system, the at least one **first output functionality** in accordance with the determined **first output;**
      wherein preferably determining the at least one digital visual content comprises:
      - creating, by means of the vehicle system and based at least in part on the **first** group of the characteristics of the audio content represented by the received audio data, at least one prompt;
      - querying, by means of the vehicle system, an AI model, such as a generative AI model, with the created prompt; and
      - receiving, by means of the vehicle system, from the generative AI model the at least one digital visual content for use as the **first output.**
Item III-4. Method according to any one of the items III-1 to III-3, wherein the method comprises:
   - determining, by means of the vehicle system and based at least in part on a second group of the characteristics of the audio content represented by the received audio data,
      wherein preferably the second group of the characteristics of the audio content represented by the received audio data comprises the one or more contextual information about at least one sequence of the audio content the audio data represents,
      at least one ambient light scheme, especially comprising at least one ambient light color spectrum and/or at least one ambient light effect such as a sunrise, dawn or dusk, as a second **output** to be provided to the at least one individual present in the vehicle using at least one second **output functionality** of the vehicle system; and
   - controlling, by means of the vehicle system, the at least one second **output functionality** in accordance with the determined second output;
      wherein preferably determining the at least one ambient light scheme comprises:
      - accessing, by means of the vehicle system, an ambient light database;
         and/or
      - creating, by means of the vehicle system and based at least in part on the second group of the characteristics of the audio content represented by the received audio data, at least one prompt;
      - querying, by means of the vehicle system, an Al model, such as a generative Al model, with the created prompt;
         and
      - receiving, by means of the vehicle system, from the generative AI model the at least one ambient light scheme for use as the **second output.**
Item III-5. Method according to any one of the items III-1 to III-4, wherein the method comprises:
   - determining, by means of the vehicle system and based at least in part on a **third** group of the characteristics of the audio content represented by the received audio data,
      wherein preferably the **third** group of the characteristics of the audio content represented by the received audio data comprises the one or more contextual information about at least one sequence of the audio content the audio data represents,
      at least one sound scheme as a **third output** to be provided to the at least one individual present in the vehicle using at least one **third output functionality** of the vehicle system;
      and
   - controlling, by means of the vehicle system, the at least one **third output functionality** in accordance with the determined **third output;**
      wherein preferably determining the at least one sound scheme comprises:
      - accessing, by means of the vehicle system, a sound database;
         and/or
      - creating, by means of the vehicle system and based at least in part on the **third** group of the characteristics of the audio content represented by the received audio data, at least one prompt;
      - querying, by means of the vehicle system, an Al model, such as a generative Al model, with the created prompt; and
      - receiving, by means of the vehicle system, from the generative Al model the at least one sound scheme for use as the **third output.**
Item III-6. Method according to any one of the items III-1 to III-5, wherein the method comprises:
   - obtaining, by means of the vehicle system, information on at least one of the at least one individual present in the vehicle, such as the number of individuals present in the vehicle.
Item III-7. Method according to item III-6, wherein the method comprises:
   - evaluating the first, second and/or third output in terms of its relevance and/or appropriateness for the at least one individual based on the obtained information;
      and
   - controlling, by means of the vehicle system, the respective at least one **output functionality** in accordance with a result of the evaluation, especially preventing the respective at least one **output** from being provided to the respective at least one output functionality.
Item III-8. Method according to any one of the items III-1 to III-7, wherein the method comprises:
   - obtaining, by means of the vehicle system, additional information on the audio content represented by the audio data, such as at least one audio transcription and/or at least one audio information, respectively, of the audio content represented by the audio data, and using the additional information in determining the respective at least one output to be provided to the at least one individual present in the vehicle using the respective at least one output functionality.
Item III-9. Method according to any one of the items III-1 to III-8, wherein the audio data is received from at least one audio source, such as at least one human-machine-interface device, at least one media player device and/or at least one navigation device.
Item III-10. Method according to any one of the items III-1 to III-9, wherein the **first output functionality** comprises at least one in-car device having a monitor, the second **output functionality** comprises at least one light device and/or the **third output functionality** comprises at least one loudspeaker device, preferably a plurality of loudspeaker devices.
Item III-11. Method according to any one of the items III-1 to III-10, wherein the first, second and/or third output functionality, respectively, is identical to an output functionality used for outputting the audio content represented by the audio data.
Item III-12. Computer program product comprising portions of program code which, when executed by a processor of a control unit of a vehicle system associated with a vehicle, cause the control unit to perform the method according to any one of items III-1 to III-11.
Item III-13. Control unit for a vehicle system, the control unit comprising a processor and a storage device operatively coupled to the processor, wherein the storage device stores portions of program code which, when executed by the processor, cause the control unit to perform the method according to any one of items III-1 to III-11.
Item III-14. Vehicle comprising a vehicle system, the vehicle system comprising:
   - a control unit according to item III-13, and
   - one or more output functionalities operatively coupled to the control unit.
Item IV:
   Item IV-1. Method for operating a vehicle system associated with a vehicle, the method comprising:
      - **obtaining,** by means of the vehicle system, a **record list** comprising one or more items of relevance for a journey;
      - **determining,** by means of the vehicle system, **at least one item** comprised by the record list but **absent from the vehicle** as non-present item of relevance;
      - **determining,** by means of the vehicle system, at least one **output** to be provided to at least one driver of the vehicle using at least one output functionality of the vehicle system, wherein the output comprises information about **at least one specific item** of the at least one non-present item of relevance;
         and
      - **controlling,** by means of the vehicle system, the at least one **output functionality** in accordance with the determined output.
   Item IV-2. The method according to item IV-1, wherein **obtaining the record list** comprises:
      - obtaining, by means of the vehicle system, at least one information relating to at least one of:
         at least one **information about an event** that is the reason for the journey,
         at least one **type of a destination location** of the journey,
         at least one **weather condition** at a destination of the journey;
         at least one information about a category of a destination of the journey,
         at least one information about the traffic on a route of the journey,
         at least one information about a **destination of the journey,**
         at least one information about one or more emails of the driver,
         at least one information available on social media about the driver,
         at least one information about one or more **entries of a calendar** of the driver,
         at least one information about one or more **entries of a to-do list** of the driver,
         information about one or more items of relevance of one or more past journeys and/or about one or more specific items of one or more past journeys,
         information about a behavior of the driver and/or a preference of the driver,
         at least one information about one or more **predefined items** to be on board of the vehicle for the journey,
         at least one information about the vehicle, and/or
         at least one information about the day;
         and
      - determining, by means of the vehicle system and based on the at least one obtained information, at least one of the items of relevance for the journey for the record list.
   Item IV-3. The method according to any one of items IV-1 to IV-2, wherein **determining the at least one item absent from the vehicle** comprises:
      - **attempting** to detect, by means of the vehicle system, especially by means of a sensor system, the non-present item of relevance in the vehicle and determining the unsuccessful attempt;
         and/or
      - **detecting,** by means of a sensor system, the presence of the non-present item of relevance outside the vehicle, such as inside a building.
   Item IV-4. The method according to any one of items IV-1 to IV-3, wherein **determining the at least one output** comprises **determining,** by means of the vehicle system and based on historical data, at least one item of the at least one non-present items of relevance as **the at least one specific item.**
   Item IV-5. The method according to any one of items IV-1 to IV-4, wherein **determining the at least one output** comprises **determining,** by means of the vehicle system and based on the historical data, a recommendation value for at least one item of the at least one non-present items of relevance, wherein the recommendation value is a measure of the necessity for the respective item to be on board the vehicle for the journey, and determining, by means of the vehicle system and based on the determined recommendation value, said at least one item as the at least one specific item.
   Item IV-6. The method according to item IV-5, wherein at least two items of the at least one non-present items of relevance are determined as **two or more specific items,** and wherein determining the at least one output comprises ranking the specific items based at least in part on the determined recommendation value of the respective specific items.
   Item IV-7. The method according to any one of items IV-5 to IV-6, wherein at least two items of the at least one non-present items of relevance are determined as **two or more specific items,** and wherein the number of specific items is limited to a maximum number which is determined based on the historical data.
   Item IV-8. The method according to any one of items IV-1 to IV-7, wherein the determined output comprises information related to the recommendation value for the specific item and/or related to a **suggestion to buy the specific item** during the journey.
   Item IV-9. The method according to any one of items IV-4 to IV-8, wherein the determined output is free of any information about the items of relevance which have not been determined as specific items.
   Item IV-10. The method according to any one of item IV-4 to IV-9, wherein the historical data comprises information (i) about one or more preferences of the driver and/or of other drivers, (ii) about one or more items of relevance of one or more past journeys and/or about one or more specific items of one or more past journeys, respectively, of the driver and/or other drivers, and/or (iii) about one or more of the determined items of relevance which have been determined as being present in the vehicle during one or more past journeys of the driver and/or other drivers.
   Item IV-11. The method according to any one of items IV-1 to IV-10, wherein the method comprises:
      - **analyzing,** by means of the vehicle system, at least one interaction of the driver with the output functionality;
         and/or
      - **receiving,** by means of the vehicle system, feedback from the driver on the relevance of the at least one specific item;
         and/or
      - **updating,** by means of the vehicle system and based on at least one result of the analysis and/or based on the feedback received from the driver, the historical data, especially the information about the driver's preference.
   Item IV-12. The method according to any one of items IV-1 to IV-11, wherein the method comprises:
      - **determining,** by means of the vehicle system and based on selection data related to items among the at least one non-present items of relevance selected by the driver, **a driving route** for the journey;
      - **determining,** by means of the vehicle system and based on the determined driving route, at least one further **output** to be provided to the driver of the vehicle using at least one further output functionality of the vehicle system, wherein the further output comprises information about the driving route;
         and
      - **controlling,** by means of the vehicle system, the at least one further output **functionality** in accordance with the determined further output.
   Item IV-13. Computer program product comprising portions of program code which, when executed by a processor of a control unit of a vehicle system associated with a vehicle, cause the control unit to perform the method according to any one of items IV-1 to IV-12.
   Item IV-14. Control unit for a vehicle system, the control unit comprising a processor and a storage device operatively coupled to the processor, wherein the storage device stores portions of program code which, when executed by the processor, cause the control unit to perform the method according to any one of items IV-1 to IV-12.
   Item IV-15. Vehicle comprising a vehicle system, the vehicle system comprising:
      - a control unit according to item IV-14, and
      - one or more output functionalities operatively coupled to the control unit.

## Claims

1. Method for operating a system, especially a vehicle system associated with a vehicle, the method comprising:
- **obtaining,** by means of the system, **user data** relating to at least one user of the system from at least one source;
- **analyzing,** by means of the system, **the user data,** thereby determining at least one user attribute of the user of the system;
- **analyzing,** by means of the system, **the at least** one **user attribute;**
and
- **controlling,** by means of the system, **at least** one **specific element** of the system in a **first way** based at least in part on at least one result of analyzing the at least one user attribute.

2. The method according to claim 1, wherein obtaining user data comprises:
- sensing, by means of a sensor system such as a camera device, an environment of the system, thereby obtaining the user data related to the user of the system, especially obtaining at least one image of the user of the system;
and/or
- accessing, by means of the system, at least one image of the user stored external to the system, such as at least one image of the user stored on a social media platform.

3. The method according to any one of claims 1 to 2, wherein **analyzing the user data** comprises:
- determining, by means of the system, based at least in part on the user data, information related to the user's appearance, and using the determined information as the at least one user attribute,
wherein preferably a CNN Multilabel classifier is used for analyzing the user data and/or for determining information related to the user's appearance and/or at least one external fashion dataset is used for determining information related to the user's appearance.

4. The method according to any one of claims 1 to 3, wherein **analyzing the at least one user attribute** comprises:
- determining, by means of the system, based at least in part on the user attributes, information related to the user's attributes,
wherein preferably a CNN Multilabel classifier is used for analyzing the at least one user attribute and/or for determining information related to the user's attributes.

5. The method according to any one of claims 1 to 4, wherein **controlling the specific element** of the system in the first way comprises adapting, by means of the system, secondary characteristics of the specific element or parts thereof, such as at least one color of the specific element or parts thereof.

6. The method according to any one of claims 1 to 5, wherein the method comprises:
- storing, by means of the system, results of consecutive analysis of user attributes in a database, thereby forming a database having historical analysis results;
- evaluating, by means of the system, one or more of the historical analysis results stored in the database;
and
- **controlling,** by means of the system, **the specific element** of the system in a **second way** based at least in part on at least one result of the evaluation of the historical analysis results.

7. The method according to claim 6, wherein **controlling the specific element** of the system in the second way comprises adapting, by means of the system, primary characteristics of the specific element or parts thereof, such as the displayed number of sub-elements, at least one layout, at least one icon style, at least one shape and/or at least one typography, respectively, of the specific element or parts thereof.

8. The method according to any one of claims 1 to 7, wherein the method comprises:
- receiving, by means of the system, context information related to the context under which the system is currently used and/or under which the user currently acts, such as at least one users' calendar information, at least one user's route destination, at least one current position of the vehicle, at least one map, at least one traffic density and/or at least one road type;
- determining, by means of the system, based at least in part on the context information, a first time to start controlling the specific element in the first way and/or a second time to start controlling the specific element in the second way;
and
- start, by means of the system, controlling the specific element in the first and/or second way at the determined first and/or second time.

9. The method according to any one of claims 1 to 8, wherein the method comprises:
- receiving, by means of the system, feedback from the user regarding at least one result of controlling the specific element in the first and/or second way, such as an acceptance and/or a rejection of at least one result of controlling the specific element;
and
- controlling, by means of the system, the specific element in the first and/or second way based further on at least one evaluation of the received feedback.

10. The method according to any one of claims 1 to 9, wherein the method comprises:
- controlling, by means of the system, the specific element in the first and/or second way based further on at least one evaluation of at least one of: a visual attention score, a visual similarity score and a content readability score.

11. The method according to any one of claims 1 to 10, wherein the specific element comprises at least one ambient light unit and/or at least one human-machine-interface, especially having at least one touch-sensitive monitor, at least one key and/or at least one knob.

12. The method according to any one of claims 1 to 11, wherein the specific element comprises at least one output functionality, which is configurable to provide perceivable output, such as visual, acoustic and/or haptic output, to a user of the system, such as a driver of the vehicle.

13. Computer program product comprising portions of program code which, when executed by a processor of a control unit of a system, especially a vehicle system associated with a vehicle, cause the control unit to perform the method according to any one of claims 1 to 12.

14. Control unit for a system, especially a vehicle system associated with a vehicle, the control unit comprising a processor and a storage device operatively coupled to the processor, wherein the storage device stores portions of program code which, when executed by the processor, cause the control unit to perform the method according to any one of claims 1 to 12.

15. Vehicle comprising a vehicle system, the vehicle system comprising:
- a control unit according to claim 14; and
- one or more specific elements, such as human-machine-interfaces and/or ambient light units, operatively coupled to the control unit.
